# EUROPEAN PATENT APPLICATION

(11) **EP 4 059 822 A1**
(43) Date of publication of application: **21.09.2022**
(21) Application number: 22162771.4
(22) Date of filing: 17.03.2022
(51) Int. Cl.: B62M 9/02, B62M 9/10, B62K 25/28, B62M 6/55

(54) **SEQUENTIAL ADJACENT DRIVE ASSEMBLY FOR A CYCLE**

(30) Priority: 19.03.2021 US 202163163602 P; 15.03.2022 US 202217695683
(71) Applicant: Weagle, David, Edgartown, MA 02539 (US)
(72) Inventor: Weagle, David, Edgartown, MA 02539 (US)
(74) Representative: Uexküll & Stolberg

(57) **Abstract**

A sequential adjacent drive assembly for a single pivot rear suspension cycle includes a cycle frame and a suspension assembly operably attached to the cycle frame. The suspension assembly includes a wheel carrier and a wheel carrier fixed pivot. A primary drive assembly includes a primary drive sprocket having a primary drive sprocket rotation axis, a primary driven sprocket, and a primary drive chain operably connecting the primary drive sprocket and the primary driven sprocket. A secondary drive assembly is operably connected to the primary drive assembly. The secondary drive assembly includes a secondary drive sprocket having a secondary drive sprocket rotation axis, a secondary driven sprocket, and a secondary drive chain operably connecting the secondary drive sprocket and the secondary driven sprocket. A wheel is operably attached to the cycle frame and the secondary driven sprocket is operably connected to the wheel.

## Description

### FIELD OF THE DISCLOSURE

The disclosure relates generally to cycle drive assemblies and more specifically relates to a sequential adjacent drive assembly for a cycle.

### BACKGROUND

Cycles, especially mountain bicycles, have seen a growth in typical wheel diameter from 26 inches from the late 1970's to the late 2000's to 29" by the 2020's. As wheel diameter has grown, wheel radius has grown accordingly.

Rear suspensions are now commonplace on bicycles, especially on mountain bikes. Rear suspensions attach a rear wheel to a sprung articulating lever by a rear axle that is concentric to the rear wheel rotation axis. The rear suspension improves ride performance, especially when encountering obstacles such as rocks, bumps, and turns.

Cycles feature frame geometry, which is the term in the art for the location of components and hardpoints (e.g., wheels, steering axis, wheel rotation axis, bottom bracket, crankarm, saddle, handlebar, and other components described using measurements) that communicate the fit of a cycle so that a rider can determine an appropriate fitting cycle for their uses, in a similar way to how a person chooses an appropriately sized piece of clothing. Cycles are typically offered in varying sizes to better fit varying sized riders. Smaller cycles are made to fit smaller riders and larger cycles are made to fit larger riders. Typically, due to complexities of design, packaging, and cost, size variation in cycles is limited to lengthening seat tubes, reach, stack, and front center to fit larger riders. Chainstay lengths are most often constant across all size cycles, sometimes because packaging constraints drive a longer than desired chainstay length and sometimes due to cost and design related issues or designer preference.

Cycles may include drivetrains for rider powered or prime mover assisted drive. Most bicycles feature chain-based drivetrains with a single or plurality of front chainrings and a rear cassette featuring a plurality of sprockets or a rear internal gearhub. Front chainrings are operably mounted to a bottom bracket which also operably mounts crankarms and pedals such that when a rider applies force at a pedal, a crankarm provides rotation at the chainring, ultimately developing tension in a chain. In direct drive type and idler drive type cycles, a front chainring must be of appropriate size to achieve an appropriate amount of torque to climb hills in the greatest gear reduction and reach higher speeds in the least gear reduction, allowing the rider to traverse a wide variety of terrain while maintaining appropriate wheel speed and torque at the wheel during various riding conditions.

Varying reduction is achieved in chain drives via shiftable sprocket systems, an action known in cycling parlance as shifting or shifting gears. In shiftable chain drives, chains are shifted from one chainring or sprocket to another via a mechanism known as a derailleur. Internal gearhubs can be used as a standalone method of varying overall gear meters or in conjunction with a shiftable sprocket system. Internal gearhubs are shifted internally via the selection of various coupled gears and integral to a wheel hub. Some other designs use a gearbox with an integral bottom bracket to drive the rear wheel via a single speed chain drive system. Most chain driven designs are known as direct drives, where a front chainring drives a rear sprocket with the chain contacting no intermediate idler. A small minority of cycles known as idler drive types, use an intermediate idler gear to manipulate the chain to a higher or lower location on the frame. An even smaller subset of designs known as jackshaft types, use an intermediate shaft to transfer power from a chainring, through the intermediate shaft, and ultimately to a rear wheel.

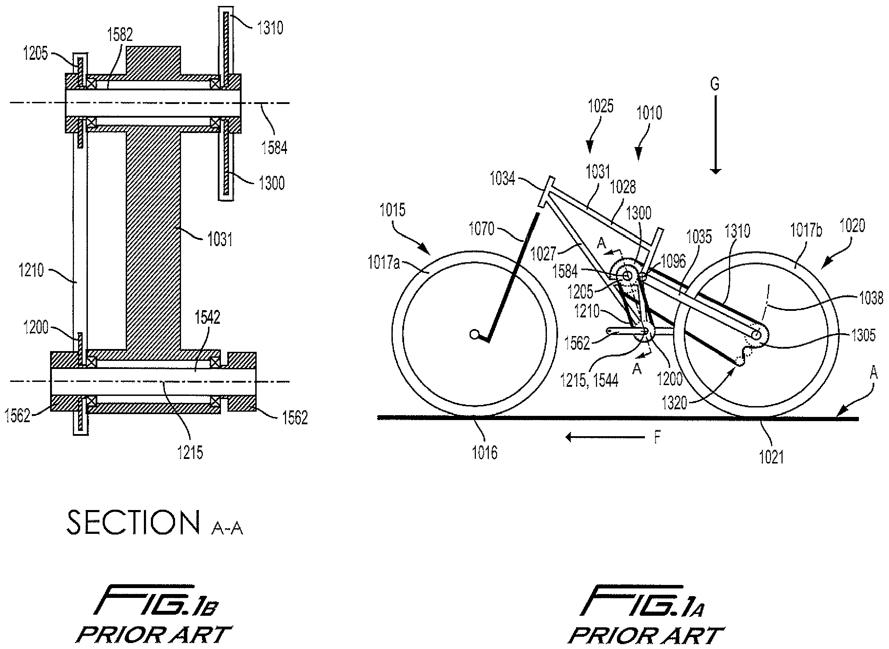

Referring now to FIGS. 1A and 1B, FIG. 1A is a schematic side view is shown of a prior art single fixed pivot rear suspension cycle 1010 on flat level ground A that is perpendicular to gravity G and including a jackshaft drive assembly in the style of the Clifcat BattleaxeTM and its related models, Balfa Nouveau Riche^{™}, Devinci Big Bang ^{™} and others. FIG. 1B is a sectional view taken along section line A-A from FIG. 1A and illustrates the location of drivetrain components with relation to a cycle frame 1025 having a front triangle 1031.

Generally, a cycle 1010 comprises a fork 1070, which is operably connected to a front wheel 1015, the front wheel 1015 including a front tire 1017a. The fork 1070 is operably connected to the front triangle 1031. The front triangle is operably connected to a rear wheel 1020, which includes a rear tire 1017b. The front tire 1017a contacts the ground A at a front wheel contact patch 1016. The rear tire 1017b contacts the ground A at a rear wheel contact patch 1021. The front triangle 1031 is complicated in structure due to a high wheel carrier 1035 having a high fixed pivot 1096. On a cycle frame, such as the front triangle 1031 of FIG. 1A, the downtube connects the head tube where the fork and ultimately front wheel are connected to the frame, and the chainstay which ultimately provides structure for supporting the rear wheel. The downtube and chainstay meet at a structurally fortified central location near the bottom bracket (sometimes referred to as "BB") shell where the drivetrain is mounted. Structural loads associated with supporting the rider on the cycle for example where the rider is standing or pushing on the pedals, and pedaling are transmitted in large part through the downtube and chainstay. The top tube is further away from the majority of the structural loads, and as a result sees less force in a typical layout. The general layout of cycles like the cycle illustrated in FIG. 1A necessitates that the downtube will be both stronger and stiffer than the top tube in large part because the loads from the pedals, cranks and bottom bracket and crank arms are greater than those from the saddle. The high fixed pivot 1096 configuration forces the cycle front triangle 1031 to have additional structural members when compared to a simplified triangular cycle frame, because the high fixed pivot 1096 is closer to a top tube than to a downtube, therefore requiring additional structure to bridge from the bottom bracket area to the jackshaft 1582 and high fixed pivot 1096.

The cycle 1010 further comprises crank arms 1562 operably connected to a spindle 1542, which rotates around a bottom bracket spindle axis 1544. The cycle 1010 also comprises a primary drive and secondary drive, with the primary drive being located on a first side of the cycle 1010 and the secondary drive being located on a second side of the cycle 1010.

The primary drive includes a primary drive sprocket 1200 having a primary drive sprocket rotation axis 1215, and a primary driven sprocket 1205, which are operably coupled by a primary drive chain 1210. The primary drive sprocket 1200 and primary driven sprocket 1205 both use approximately 22 teeth, coupled by a primary drive chain 1210 using approximately 54 links. The primary driven sprocket 1205 is operably connected to a secondary driven sprocket 1300 using approximately 38 teeth, for example as in Clifcat model identified above. The large number of teeth, and therefore the large diameter, of the secondary drive sprocket 1300 makes packaging problematic, which therefore requires compromises in frame geometry, overall cycle 1010 weight, and suspension performance.

The primary driven sprocket 1205 is operably connected to the secondary drive sprocket 1300 via a jackshaft 1582. The jackshaft 1582 rotates about a jackshaft rotation axis 1584, and passes through the cycle front triangle 1031 such that the primary drive and secondary drive are on opposite sides of the cycle front triangle 1031.

The secondary drive includes the secondary drive sprocket 1300 and a secondary driven sprocket 1305 which are coupled by a secondary drive chain 1310 which additionally is routed through a rear derailleur 1320. The location of the high fixed pivot 1096 is so high compared to the location of the bottom bracket spindle rotation axis 1544 that an axle path 1038 moves rearward relative to the bottom bracket spindle rotation axis 1544 throughout the entire rear suspension vertical displacement (from minimum compression to maximum compression) as the rear suspension compresses, as illustrated. The axle path 1038 has no inflection point and no forward movement during rear suspension compression. The high fixed pivot 1096 is non-co-located with the jackshaft rotation axis 1584.

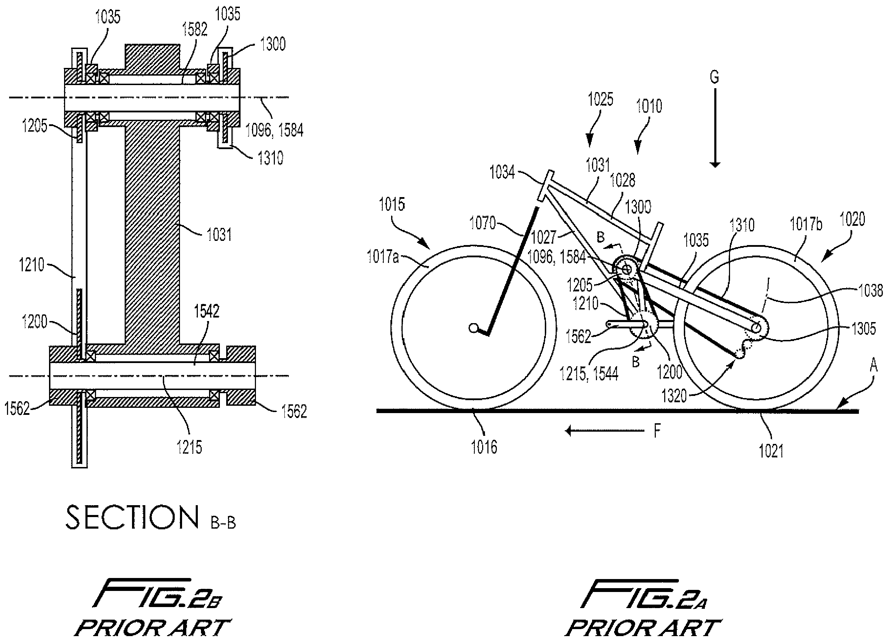

Referring now to FIGS. 2A and 2B, FIG. 2A is a schematic side view is shown of a prior art single fixed pivot rear suspension cycle 1010 on flat level ground A that is perpendicular to gravity G and including a jackshaft drive assembly in the style of the Brooklyn Machine Works TMX, Racelink, Superco Silencer and others. FIG. 2B is a section view taken along section line B-B from FIG. 2A and illustrates the location of the drivetrain components with relation to the cycle front triangle 1031.

The cycle includes the fork 1070, which is operably connected to the front wheel 1015, the front wheel 1015 including a front tire 1017a. The fork 1070 is operably connected to the front triangle 1031. The rear wheel 1020 includes a rear tire 1017b. The front tire 1017a contacts the ground at the front wheel contact patch 1016. The rear tire 1017 contacts the ground at the rear wheel contact patch 1021. The cycle front triangle 1031 is complicated in structure due to the high wheel carrier 1035 having an extremely high fixed pivot 1096 location. This high fixed pivot 1096 configuration requires the frame structure to have additional members compared to a simplified triangular frame, as the high fixed pivot 1096 location is closer to the top tube than the downtube. The cycle 1010 has crank arms 1562 connected to a spindle 1542, which rotates around a bottom bracket spindle axis 1544.

The cycle 1010 also includes a primary drive and secondary drive, with the primary drive being located on a first side of the cycle 1010 and the secondary drive being located on a second side of the cycle 1010. The primary drive comprises a primary drive sprocket 1200 having a primary drive sprocket rotation axis 1215, and a primary driven sprocket 1205, which are operably coupled by a primary drive chain 1210.

On the Superco silencer model, for example, when a change in gear ratio is desired, the primary drive sprocket 1200, primary driven sprocket 1205, and primary drive chain 1210 must all be changed. The primary driven sprocket 1205 is operably connected to a secondary drive sprocket 1300 via a jackshaft 1582. The jackshaft 1582 rotates about a jackshaft rotation axis 1584, and passes through the cycle front triangle 1031 such that the primary drive and secondary drive are on opposite sides of the cycle front triangle 1031.

The secondary drive comprises the secondary drive sprocket 1300 and a secondary driven sprocket 1305, which are operably coupled by a secondary drive chain 1310 that additionally is routed through a rear derailleur 320. The location of the high fixed pivot 1096 is so high compared to the location of the bottom bracket spindle rotation axis 1544 that the axle path 1038 is rearward relative to the bottom bracket spindle rotation axis 1544 throughout the entire rear suspension vertical displacement during compression (from minimum compression to maximum compression), as illustrated. The axle path 1038 has no inflection point and no forward curvature during compression. The high fixed pivot 1096 is non-co-located with the jackshaft rotation axis 1584.

### SUMMARY

According to a first aspect, a sequential adjacent drive assembly for a single pivot rear suspension cycle includes a cycle frame and a suspension assembly operably attached to the cycle frame. The suspension assembly includes a wheel carrier and a wheel carrier fixed pivot. A primary drive assembly includes a primary drive sprocket having a primary drive sprocket rotation axis, a primary driven sprocket, and a primary drive chain operably connecting the primary drive sprocket and the primary driven sprocket. The primary drive sprocket and the primary driven sprocket have a fixed drive ratio therebetween. A secondary drive assembly is operably connected to the primary drive assembly. The secondary drive assembly includes a secondary drive sprocket having a secondary drive sprocket rotation axis, a secondary driven sprocket, and a secondary drive chain operably connecting the secondary drive sprocket and the secondary driven sprocket. The primary driven sprocket and the secondary drive sprocket have a fixed drive ratio therebetween. A wheel is operably attached to the cycle frame and the secondary driven sprocket is operably connected to the wheel. The wheel has a rotation axis and a plane of symmetry perpendicular to the rotation axis. The wheel carrier fixed pivot is located separately from the primary drive sprocket rotation axis and the secondary drive sprocket rotation axis. The primary drive sprocket and the secondary drive sprocket are on the first side of the tire plane of symmetry.

According to a second aspect, a sequential adjacent drive assembly for a cycle includes a cycle frame and a suspension assembly operably attached to the frame. The suspension assembly includes a wheel carrier and a wheel carrier fixed pivot. A primary drive assembly includes a primary drive sprocket having a maximum circle diameter and a primary drive sprocket rotation axis, a primary driven sprocket, and a primary drive chain operably connecting the primary drive sprocket and the primary driven sprocket. A secondary drive assembly is operably connected to the primary drive assembly. The secondary drive assembly includes a secondary drive sprocket having a maximum circle diameter and a secondary drive sprocket rotation axis, a secondary driven sprocket, and a secondary drive chain operably connecting the secondary drive sprocket to the secondary driven sprocket. A wheel is operably attached to the cycle frame and the secondary driven sprocket is operably connected to the wheel. The maximum circle diameter of the primary drive sprocket overlaps with the maximum circle diameter of the secondary drive sprocket when viewed from a side of the cycle frame and colinear with the secondary drive sprocket rotation axis.

According to a third aspect, a sequential adjacent drive assembly for a cycle includes a cycle frame and a wheel operably attached to the cycle frame. The wheel has a rotation axis and a tire plane of symmetry perpendicular to the rotation axis. A primary drive assembly is operably attached to the cycle frame on a first side of the tire plane of symmetry. The primary drive assembly includes a primary drive sprocket having and a primary drive sprocket rotation axis, a primary driven sprocket, and a primary drive chain operably connecting the primary drive sprocket and the primary driven sprocket. The primary drive sprocket and the primary driven sprocket have a fixed drive ratio therebetween. A secondary drive assembly is operably attached to the cycle frame on the first side of the tire plane of symmetry. The secondary drive assembly is operably connected to the primary drive assembly and the secondary drive assembly includes a secondary drive sprocket having a secondary drive sprocket rotation axis, a plurality of selectable secondary driven sprockets, a secondary drive chain operably connecting the secondary drive sprocket and the plurality of selectable secondary driven sprockets, and a derailleur. The primary driven sprocket and the secondary drive sprocket have a fixed drive ratio therebetween.

According to a fourth aspect, a sequential adjacent electric drive assembly for a rear suspension cycle includes a cycle frame and a suspension assembly operably attached to the cycle frame. The suspension assembly includes a wheel carrier and a wheel carrier fixed pivot. A wheel is operably attached to the suspension assembly. A primary drive assembly is operably attached to the cycle frame. The primary drive assembly includes a primary drive sprocket having a maximum circle diameter and a primary drive sprocket rotation axis, a primary driven sprocket, and a primary drive chain operably connecting the primary drive sprocket to the primary driven sprocket. The primary drive sprocket and the primary driven sprocket have a fixed drive ratio therebetween. A secondary drive assembly is operably attached to the cycle frame. The secondary drive assembly includes a secondary drive sprocket having a maximum circle diameter and a secondary drive sprocket rotation axis, a secondary driven sprocket, and a secondary drive chain operably connecting the secondary drive sprocket and the secondary driven sprocket. The primary driven sprocket and the secondary drive sprocket have a fixed drive ratio therebetween. An electric drive assembly includes a motor that is operatively connected to the primary drive sprocket.

According to a fifth aspect, a sequential adjacent drive assembly for a rear suspension cycle includes a cycle frame and a suspension assembly operably connected to the cycle frame. The suspension assembly includes a wheel carrier and a wheel carrier fixed pivot. A wheel is operably attached to the wheel carrier. A primary drive assembly is operably attached to the cycle frame. The primary drive assembly includes a primary drive sprocket having a maximum circle diameter and a primary drive sprocket rotation axis, a primary driven sprocket, and a primary drive chain operably connecting the primary drive sprocket and the primary driven sprocket. A secondary drive assembly is operably connected to the primary drive assembly and to the cycle frame. The secondary drive assembly includes a secondary drive sprocket having a maximum circle diameter and a secondary drive sprocket rotation axis, a secondary driven sprocket, and a secondary drive chain operably connecting the secondary drive sprocket and the secondary driven sprocket. A secondary drive chain maximum perimeter overlaps with the maximum circle diameter of the primary drive sprocket when viewed from a side of the frame and collinear with the secondary drive sprocket rotation axis.

According to a sixth aspect, a sequential adjacent drive assembly for a cycle includes a cycle frame and a suspension assembly operably connected to the cycle frame. The suspension assembly includes a wheel carrier and a wheel carrier fixed pivot. A wheel is rotatably attached to the suspension assembly. The wheel rotates about a rotation axis and a tire plane of symmetry perpendicular to the rotation axis. A primary drive assembly is operably attached to the cycle frame. The primary drive assembly includes a primary drive sprocket having a primary drive axis of rotation, a primary driven sprocket, and a primary drive chain operably connecting the primary drive sprocket and the primary driven sprocket. The primary drive sprocket and the primary driven sprocket have a fixed drive ratio therebetween. A secondary drive assembly is operably connected to the primary drive assembly and to the cycle frame. The secondary drive assembly includes a secondary drive sprocket having a secondary drive sprocket rotation axis, a plurality of selectable secondary driven sprockets, a secondary drive chain operably connecting the secondary drive sprocket to the plurality of selectable secondary driven sprockets, and a rear derailleur. The primary driven sprocket and the secondary drive sprocket have a fixed drive ratio therebetween. The primary drive chain and the secondary drive chain are located on the same side of the tire plane of symmetry.

According to a seventh aspect, a sequential adjacent drive assembly for a single pivot rear suspension cycle includes a cycle frame and a suspension assembly operably connected to the cycle frame. The suspension assembly includes a wheel carrier and a wheel carrier fixed pivot. A wheel is rotatably attached to the wheel carrier. The wheel rotates about a rotation axis and a tire plane of symmetry perpendicular to the wheel rotation axis. The wheel rotation axis articulates about the wheel carrier fixed pivot relative to the cycle frame in an arc with a constant radius. The wheel rotation axis moves towards the secondary drive sprocket during at least some suspension travel when the cycle is viewed from the side. A driving force line is defined as a line between the wheel rotation axis and the wheel carrier fixed pivot. A primary drive assembly is operably attached to the cycle frame. The primary drive assembly includes a primary drive sprocket having a primary drive sprocket rotation axis, a primary driven sprocket, and a primary drive chain operably connecting the primary drive sprocket and the primary driven sprocket. A secondary drive assembly is operably connected to the primary drive assembly and to the cycle frame. The secondary drive assembly includes a secondary drive sprocket having a secondary drive sprocket rotation axis, a secondary driven sprocket, and a secondary drive chain operably connecting the secondary drive sprocket and the secondary driven sprocket. The driving force line is perpendicularly offset from the secondary drive sprocket rotation axis by greater than 0.5 mm.

According to an eighth aspect, a sequential adjacent drive assembly includes a cycle frame and a suspension assembly operably connected to the cycle frame, the suspension assembly having a wheel carrier and a wheel carrier fixed pivot. A wheel is rotatably attached to the suspension assembly, the wheel including a rotation axis and a tire plane of symmetry perpendicular to the rotation axis. A primary drive assembly is operably attached to the cycle frame, the primary drive assembly including a primary drive sprocket having a primary drive axis of rotation, a primary driven sprocket, and a primary drive chain operably connecting the primary drive sprocket and the primary driven sprocket, the primary drive sprocket and the primary driven sprocket having a fixed drive ratio therebetween. A secondary drive assembly is operably connected to the primary drive assembly and to the cycle frame, the secondary drive assembly including a secondary drive sprocket having a secondary drive sprocket rotation axis, a secondary driven sprocket, a secondary drive chain operably connecting the secondary drive sprocket to the secondary driven sprockets and a rear derailleur, the primary driven sprocket and the secondary drive sprocket having a fixed drive ratio therebetween, The rotation axis of the wheel moves both vertically and horizontally as the suspension assembly compresses relative to the primary drive sprocket. The rotation axis of the wheel has a first location when the suspension assembly is in an uncompressed state and a second location when the suspension assembly is in a fully compressed state. While the fork remains uncompressed and the cycle frame is held fixed in space relative to flat level ground that is parallel to the X direction (illustrated as a horizontal direction in the figures) and perpendicular to gravity or Y direction (illustrated as vertical in the figures), the rotation axis moves away in the X direction from the primary drive sprocket from the first location as the suspension assembly starts to compress from the uncompressed state in the Y direction until the rotation axis reaches an inflection point and, thereafter, the rotation axis moves towards the primary drive in the X direction from the inflection point to the second location.

A sequential adjacent drive assembly includes a cycle frame and a suspension assembly operably connected to the cycle frame, the suspension assembly including a wheel carrier and a wheel carrier fixed pivot. A wheel is rotatably attached to the suspension assembly, the wheel having a rotation axis and a tire plane of symmetry perpendicular to the rotation axis. A primary drive assembly is operably attached to the cycle frame, the primary drive assembly including a primary drive sprocket having a primary drive axis of rotation, a primary driven sprocket, and a primary drive chain operably connecting the primary drive sprocket and the primary driven sprocket, the primary drive sprocket and the primary driven sprocket having a fixed drive ratio therebetween. A secondary drive assembly is operably connected to the primary drive assembly and to the cycle frame, the secondary drive assembly including a secondary drive sprocket having a secondary drive sprocket rotation axis, a secondary driven sprocket, a secondary drive chain operably connecting the secondary drive sprocket to the secondary driven sprockets and a rear derailleur, the primary driven sprocket and the secondary drive sprocket having a fixed drive ratio therebetween, One of the primary drive sprocket, the primary driven sprocket, and the secondary drive sprocket has a sprocket pitch diameter of between 37 mm and 245 mm.

In accordance with the teachings of the disclosure, any one or more of the foregoing aspects of a sequential adjacent drive assembly may further include any one or more of the following optional forms.

In some optional forms, the primary drive sprocket is operatively connected to a coupling mechanism that transmits torque from the primary driven sprocket to a crank spindle in a first direction of rotation and allows decoupled rotation of the crank spindle in a second direction of rotation, which is opposite of the first direction of rotation.

In other optional forms, the primary driven sprocket is operatively connected to a coupling mechanism that transmits torque from the primary driven sprocket to the secondary drive sprocket in a first direction of rotation and allows decoupled rotation of the secondary drive sprocket in a second direction of rotation, which is opposite of the first direction of rotation.

In other optional forms, the secondary drive sprocket is operatively connected to a coupling mechanism that transmits torque from the secondary drive sprocket to the primary driven sprocket in a first direction of rotation and allows decoupled rotation of the secondary drive sprocket in a second direction of rotation, which is opposite of the first direction of rotation.

In yet other optional forms, the secondary drive sprocket is operatively connected to a coupling mechanism that transmits torque from the secondary drive sprocket to the primary driven sprocket in a first direction of rotation and allows decoupled rotation of the secondary drive sprocket in the first and a second direction of rotation.

In yet other optional forms, the coupling mechanism comprises a freewheel.

In yet other optional forms, the coupling mechanism is a freecoaster.

In yet other optional forms, the coupling mechanism is a clutch.

In yet other optional forms, the coupling mechanism comprises one of a disengaging drive mechanism, a roller clutch, a planetary freecoaster, a sprag bearing, a ratchet, a one-way bearing, a one-way needle bearing, a one-way roller bearing, a one-way ball bearing, a roller ramp clutch, an electro-activated clutch, a cable actuated clutch, a hydraulic clutch, or a pneumatic clutch.

In yet other optional forms, the wheel carrier fixed pivot is disposed farther from the primary drive sprocket rotation axis than the secondary drive sprocket rotation axis is from the primary drive sprocket rotation axis.

In yet other optional forms, the wheel carrier fixed pivot is disposed forward or aft of the secondary drive sprocket rotation axis in a direction of travel when the cycle is on a substantially flat level ground.

In yet other optional forms, the sequential adjacent drive assembly includes a shock absorber.

In yet other optional forms, the sequential adjacent drive assembly includes a chainstay yoke.

In yet other optional forms, the chainstay yoke is elevated above a bottom bracket when the cycle is on substantially flat level ground.

In yet other optional forms, a driving force line under full suspension compression is greater than 0.5 mm and less than 30 mm perpendicular distance to the secondary drive sprocket rotation axis.

In yet other optional forms, the sequential adjacent drive assembly includes an electric motor.

In yet other optional forms, the electric motor is operably connected to an intermediate sprocket located between primary drive sprocket and secondary drive sprocket.

In yet other optional forms, the secondary drive sprocket is positioned outboard of the primary drive sprocket relative to a tire plane of symmetry.

In yet other optional forms, the primary drive assembly is positioned outboard of the secondary drive assembly relative to a tire plane of symmetry.

In yet other optional forms, the sequential adjacent drive assembly includes a disc brake disposed on a side of a tire plane of symmetry than the primary drive sprocket and the secondary drive sprocket.

In yet other optional forms, the primary drive chain and the secondary drive chain are located on the same side of the tire plane of symmetry and are offset from the tire plane of symmetry by at least 10 mm.

### BRIEF DESCRIPTION OF THE DRAWINGS

While the specification concludes with claims particularly pointing out and distinctly claiming the subject matter, which is regarded as forming the present invention, the invention will be better understood from the following description taken in conjunction with the accompanying drawings.
FIG. 1A is a schematic side view of a first prior art single fixed pivot rear suspension cycle including a jackshaft drive assembly.
FIG. 1B is a cross-section taken along section line A-A from FIG. 1A.
FIG. 2A is a schematic side view of a second prior art single fixed pivot rear suspension cycle including a jackshaft drive assembly.
FIG. 2B is a cross-section taken along section line B-B from FIG. 2A.
FIG. 3 is a side view of a hardtail cycle including a sequential adjacent drive assembly constructed in accordance with the disclosure.
FIG. 4A is a close up side view of the sequential adjacent drive assembly of FIG. 1.
FIG. 4B is a close up side view of a primary drive sprocket, a primary driven sprocket, and a secondary drive sprocket of the sequential adjacent drive assembly of FIG. 4A.
FIG. 5A is a side view of sprockets and pulleys that may be used in the sequential adjacent drive assembly of FIG. 4A.
FIG. 5B is a side view of a primary drive assembly of the sequential adjacent drive assembly of FIG. 4A.
FIG. 5C is a partial side view of a secondary drive assembly of the sequential adjacent drive assembly of FIG. 4A.
FIG. 5D is a side view of an alternative embodiment of a primary drive pulley and a primary driven pulley that may be used in the sequential adjacent drive assembly.
FIG. 5E is a cut-away view of the primary drive pulley and primary driven pulley of FIG. 5D.
FIGS. 6A-6E include multiple views of a drive chain and drive components that may be used in the sequential adjacent drive assembly.
FIGS. 7A and 7B include side views of different sized sprockets that may be used in the sequential adjacent drive assembly.
FIG. 7C is a graph of chain articulation angle vs number of sprocket teeth.
FIG. 7D is a chart illustrating chainring tooth pressure for sprockets of different materials useful for sequential adjacent drives.
FIGS. 7E-7I are a series of charts illustrating improvements in total chain articulation angle of example sequential adjacent drive assemblies as compared to existing prior art cycles.
FIGS. 8A-8C include multiple views of an alternative sequential adjacent drive assembly that includes an electric motor.
FIG. 8D includes a side view of the alternative sequential drive assembly of FIGS. 8A-8C illustrating a mid-drive electric motor.
FIG. 8E is a sectional view taken along section D-D of FIG. 8D of the alternative sequential adjacent drive assembly illustrating internal components of a mid-drive including a freewheel.
FIGS. 8F-8G include multiple perspective views of the alternative sequential adjacent drive assembly of FIG. 8A.
FIG. 9 is a side view of a single fixed pivot rear suspension cycle including a sequential adjacent drive assembly constructed in accordance with the disclosure.
FIG. 10 is a side view of a single fixed pivot rear suspension cycle including an alternate sequential adjacent drive assembly having an electric motor.
FIG. 11 is a schematic side view of a cycle illustrating frame geometry.
FIG. 12A is a chart of primary and secondary drive ratios.
FIG. 12B is a chart illustrating gear ratios and packaging parameters for 750mm diameter (29" class) sequential adjacent drive systems.
FIG. 12C is a chart illustrating gear ratios and packaging parameters for 710mm diameter (27.5" class) sequential adjacent drive systems.
FIG. 13 is s close up side view of the primary drive sprocket, a primary driven sprocket, and a secondary drive sprocket of a sequential adjacent drive assembly constructed in accordance with the disclosure, including a shaded section showing overlap between the secondary drive chain and the primary drive sprocket.
FIGS. 14A and 14B are a side view and a front view of a rear wheel including a tire plane of symmetry.
FIGS. 15A-15D include several views of a direct drive chainstay and chainstay yoke.
FIGS. 16A-16D include several views of an e-bike direct drive chainstay and chainstay yoke.
FIG. 17 is a side view of the primary drive sprocket and the secondary drive sprocket of a sequential adjacent drive assembly constructed in accordance with the disclosure, and showing maximum circle diameter overlap.
FIG. 18 is a side view of the primary drive sprocket and the secondary drive sprocket of a sequential adjacent drive assembly constructed in accordance with the disclosure, and showing tooth overlap.
FIG. 19 is a side view of the primary drive sprocket and the secondary drive sprocket of a sequential adjacent drive assembly constructed in accordance with the disclosure, and showing center distance and clearance distance.
FIG. 20A is a schematic side view of a cycle including the sequential adjacent drive system, an axle path, and an axle path inflection point
FIG. 20B is a cross-section taken along section line F-F in FIG. 20A.

### DETAILED DESCRIPTION OF THE INVENTION

The present invention should not be limited in scope by the specific embodiments described below, which are intended as exemplary illustrations of individual aspects of the invention. Functionally equivalent methods and components fall within the scope of the invention. Indeed, various modifications of the invention, in addition to those shown and described herein, will become apparent to those skilled in the art from the foregoing description. Such modifications are intended to fall within the scope of the appended claims. Throughout this application, the singular includes the plural and the plural includes the singular, unless indicated otherwise. The words "formed," "provided," "disposed," and "located," individually or in combination, are used to denote relative positioning in the instant description. All cited publications, patents, and patent applications are herein incorporated by reference in their entirety.

As used herein, the term "operably connected" or "operable connection" means any direct or indirect connection between two elements. For example, if a first element is directly connected to a first sprocket in a drivetrain assembly, the first element is "operably connected" to all components in the drivetrain assembly because the first element is indirectly connected to all components in the drivetrain assembly by the direct connection to the first sprocket. While a two-wheeled bicycle is disclosed, the disclosed wheel assemblies are equally applicable to any cycle for on-road or off-road use, such as motorcycle, unicycle, or tricycle vehicles. Furthermore, the disclosed drivetrain assemblies are easily retrofittable to traditional cycles. As used herein, the term "sprocket" includes any wheel that is connected to a driving element (e.g., chain or belt) and specifically includes chain sprockets, synchronous belt pulleys, chainrings, or subcomponents of cassettes. The term sprocket may be further modified (for example with sequential terms, such as primary, secondary, first, second, etc.) to specifically differentiate between multiple sprockets of an assembly. As used herein, "flat level ground" means a surface that is substantially planar in nature and substantially perpendicular to gravity (G in the figures). For example, flat level ground includes a smooth flat planar concrete floor that is substantially perpendicular to gravity. The term inboard for a 2-wheeled cycle means closer to the center plane (or a plane of symmetry) of the rear tire, and the term outboard means further from the center plane (or plane of symmetry) of the rear tire. The term inboard for a multi-wheeled vehicle means closer to the mid plane of the two most widely spaced wheels, and the and the term outboard means further from the mid plane of the two most widely spaced wheels.

A pivot, as used herein, includes any connection structure that may be used to operatively connect one element to another element, and that allows relative movement between the connected components. An operative connection may allow for one component to move in relation to another while constraining movement in one or more degrees of freedom. For example, the one degree of freedom may be pivoting about an axis. In one embodiment, a pivot may be formed from a journal or through hole in one component and an axle in another component. In other examples, pivots may include ball and socket joints. Yet other examples of pivots include but are not limited to singular embodiments and combinations of, compliant mounts, sandwich style mounts, post mounts, bushings, bearings, ball bearings, plain bearings, flexible couplings, flexure pivots, journals, holes, pins, bolts, and other fasteners. Also, as used herein, a fixed pivot is defined as a pivotable structure that does not change position relative to another element (for example a cycle frame). As used herein, a floating pivot is defined as a pivot that is movable (or changes position) relative to another element (for example a fixed pivot and/or a cycle frame).

In a cycling product lines, there are significant values to a cycle manufacturer to offer similar if not otherwise identical models in both analog human-only powered and electric mid-drive prime mover assisted cycles. In many cases, products may share rear wheel travel, wheels, tires, front fork 70 travel, crankarm length, and use similar frame geometry, with the main differentiator being pedal assisted or not. However, due to the packaging issues explained herein, the factors of packaging constraints, chainring size variation and suspension performance require that completely different wheel carriers be used for analog human powered cycles and their prime over assisted counterparts especially those using mid-drives.

The disclosed sequential adjacent drive assemblies advantageously allow the use of shared wheel carriers between analog human-only powered and electric mid-drive prime mover assisted cycles. The location of the secondary drive sprocket, which ultimately drives the rear cassette is not constrained around the bottom bracket center, therefore the secondary drive sprocket rotation axis can be moved in the X and Y directions. The elevated tension side of the secondary drive chain allows for placement of a wheel carrier fixed pivot further above the bottom bracket and/or mid-drive than in a conventional direct drive cycle. The ability to use a wheel carrier fixed pivot location that is further above a crank spindle axis and non-co-located to the wheel carrier fixed pivot axis allows a wider range of fixed pivot locations because there are fewer components vying for that same space in the cycle frame and thus the same wheel carrier dimensions and in most cases the same wheel carrier component can be used for both analog and prime mover assisted cycles.

In certain embodiments disclosed herein, a single wheel carrier component can be preconfigured to be used on rear suspension cycle frames of varying rear wheel displacement. The ability to vary both secondary chain force line location, wheel carrier fixed pivot location, and provide for optimal chain wrap up to and beyond 120 degrees around a primary drive sprocket, a primary driven sprocket, and a secondary drive sprocket while independently varying chain stay length to meet varying frame geometry designs is highly advantageous to a cycling frame manufacturer. Through the implementation of the disclosed sequential adjacent drive assemblies across an entire product line of cycles, wheel carriers, pivot parts, bearings, and other hardware can be shared across analog and prime mover assisted cycles. Such implementation across a product line is a cost savings for the manufacturer even as the overall per unit part count grows slightly compared to direct drive cycles, the volume of these parts and part sharing ability provides that as additional models are developed, the actual drawing and part count to manage decreases. Furthermore, the sharing of wheel carriers and the simplification of the chainstay yoke area design results in a highly beneficial and significant savings in product development time. This development time savings can allow cycling companies to bring new products to market in less than 33% of the time of conventional direct drive rear suspension cycles where bespoke wheel carriers must be developed for each model. The elapsed time to bring new models to market is one of the most important drivers for a cycling business, and therefore the disclosed sequential adjacent drive assemblies ability to permit and incentivize the use of shared wheel carriers between analog human-only powered and electric mid-drive prime mover assisted cycles aims directly at one of the most important income and profit drivers for cycling companies today.

The disclosed sequential adjacent drive assemblies solve a multitude of issues related to cycle design and allow for improved rear suspension performance, improved packaging, simplified cycle engineering, reduced design effort, and easier manufacturing of cycles. The resulting products are faster and more cost effective to develop, thereby providing riders with an opportunity for improved performance at a lower cost and at greater profit to the manufacturer.

Chain and associated part life are also extended by the disclosed sequential adjacent drive assemblies through less compromised chain routing than those associated with small idler set ups. The sequential adjacent drive increases the number of teeth in contact between the smallest sprocket and drive chain by providing increased chain wrap. There is also a financial advantage to the user of a sequential adjacent drive as compared to a typical idler bike. Bicycle chains are typically sold with a certain number of links, for example, 118 and 122 link standard length chains are popular. Typical idler bikes feature a longer than standard chain length many in the range of 128-34 links, and therefore require more than the commonly purchasable amount of links in a single chain. This requires the user to purchase two chains and splice them together to fit one idler bike, and throw away the remaining unused chain. In the disclosed sequential adjacent drive assemblies, replacement chain cost is minimized through use of a standard length single chain. The disclosed sequential adjacent drive assemblies may use standard non-narrow wide chainrings and bmx to 9speed chain on the primary drive sprocket, further saving costs. Furthermore, the secondary drive chain could use a standard length 12+ speed chain, again further saving costs.

Cycles are piloted by riders, and as anyone who has learned to ride a bicycle can attest, there is a learning curve to becoming a proficient rider. A rider must train their balance so that they can learn to stay upright on the cycle. The same balance that riders must learn to stay upright in a side-to-side direction also applies in a front to back direction. For example, a rider doing a "wheelie" or "manual" requires the cycle and rider to balance on the rear wheel only, or an "endo" or "stoppie turn" requires the cycle and rider to balance on the front wheel only. The fore-aft balance that allows for wheelies, manuals, endos, and stoppie turns is also at play while cornering. At corner entry, a skilled rider shifts their weight forward to the front contact patch 16 to initiate a turn. By mid-corner, the rider's weight has become more centered between the tire contact patches, and at corner exit, the rider has shifted their weight more to the rear contact patch. By transferring weight, at least partially, between the fore and aft wheels, the rider instinctively increases frictional force on the wheel that will most help control the cycle in a given segment of a maneuver.

Compared to other vehicles, bicycles by nature have a relatively high center of mass location and a relatively short wheelbase. The rider and cycle's masses are acted upon by gravity, and the weight of the rider and cycle can be measured as loads at the contact points between the tires and the ground, with a typical weight distribution at the wheels of around 65% rear, 35% front when measured with the bicycle on flat level ground. When a bicycle accelerates forward, the rider's mass tends to resist acceleration, and the weight of the rider shifts rearwards. This weight shift can be measured at the wheel to ground contact patches and is known in the art as load transfer. As load is transferred to the rear suspension, left unchecked the suspension will compress, at the detriment to suspension performance. The inherent arrangement in cycles of high center of mass and short wheelbase has resulted in suspension designs that rely on tactically engineered internal chassis forces such as anti-squat, braking squat, and leverage ratio so as to minimize the detrimental effects of load transfer and other external forces on suspension performance. Cycle suspensions are useful for providing wheel compliance and therefore traction while riding, especially while the cycle is cornering on rough terrain. As the rear wheel moves to track rough ground, it moves up and down, and also forwards and rearwards as defined by the kinematics of the rear suspension articulating levers.

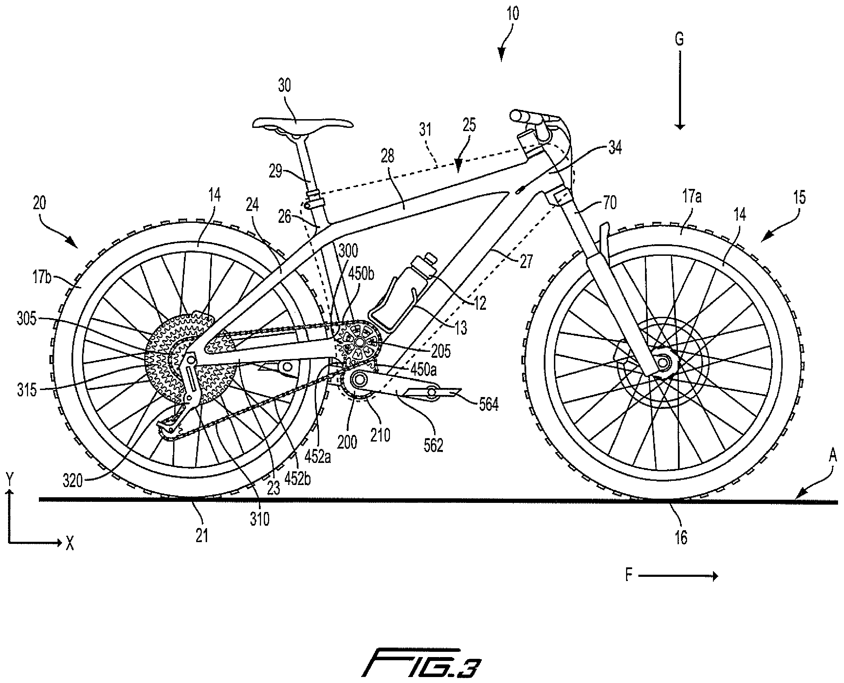

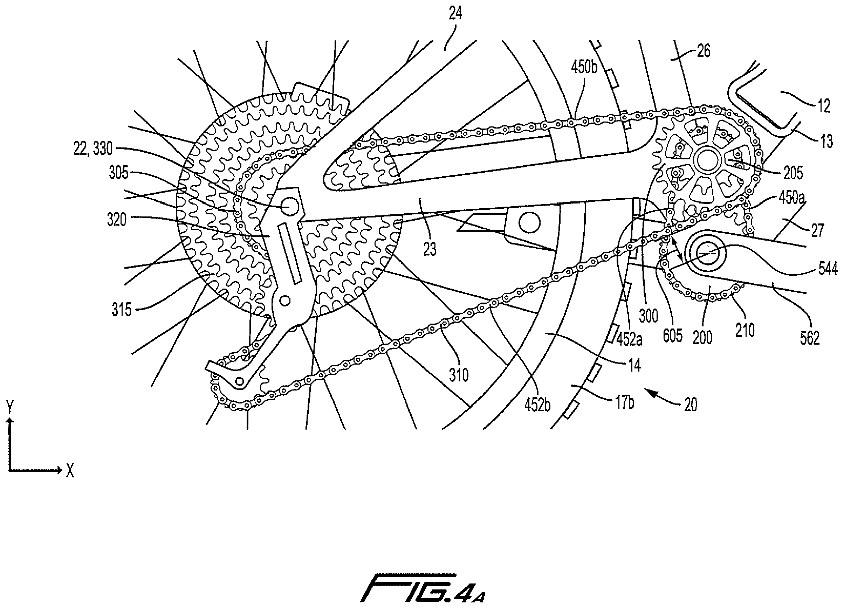

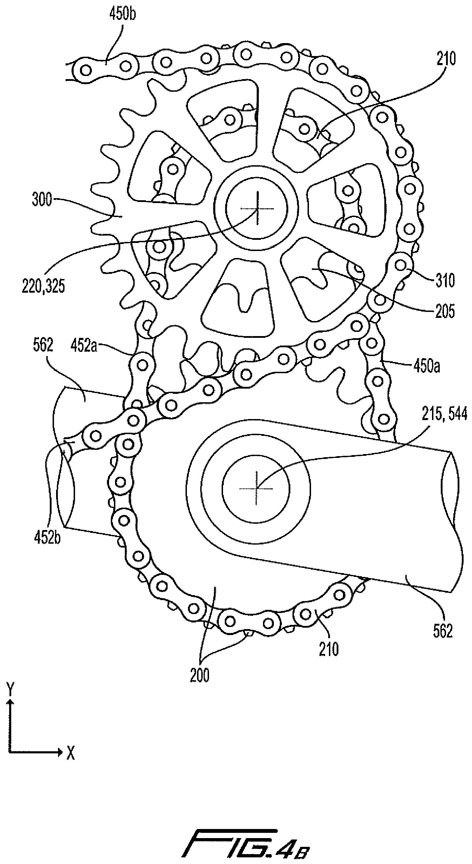

Referring now to FIGS. 3, 4A, and 4B, a schematic side view and closeup views are shown of a cycle 10, including a frame 25 and a sequential adjacent drive assembly, which are located on flat level ground A that is perpendicular to gravity G. The flat level ground A being flat, level, and perpendicular to gravity G are illustrated only for the purposes of clearly describing the cycle 10 and the sequential adjacent drive assembly, and are not intended to limit the sequential adjacent drive assembly in any way. In some embodiments, the sequential adjacent drive assembly described herein may be installed on any cycle, and the cycle may be used on uneven, angled, or undulating ground that may not be perpendicular to the force of gravity G.

The frame 25 includes an interconnected top tube 28, a downtube 27, a seat tube 26, a chainstay 23, and a seatstay 24. The combination of the top tube 28, the downtube 27, and the seat tube 26 form a front triangle 31, and the combination of the seatstay 24 and the chainstay 23 form a rear triangle. At the front of the frame 25, a fork 70 is operably connected to a head tube 34. The fork 70 also operably connects to a front wheel 15 comprising a front tire 17a, a rim 14, and a front hub. The front tire 17 contacts the ground A at a front contact patch 16. At the rear of the frame 25, the seatstay 24 and chainstay 23 are operably connected to a dropout which operably connects to a rear wheel 20 comprising a tire 17b, a rim 14, and a rear hub. The rear wheel 20 rotates around a rear wheel rotation axis 22, and the rear tire 17b contacts the ground A at a rear contact patch 21. The frame 25 further supports a seatpost 29, which is operably connected to a saddle 30. A bottle cage 13 may optionally hold a bottle 12. A lower chain distance to BB center 605 is measured as the perpendicular distance from the bottom of the slack side 452 of the secondary drive chain 310 to the bottom bracket spindle axis 544.

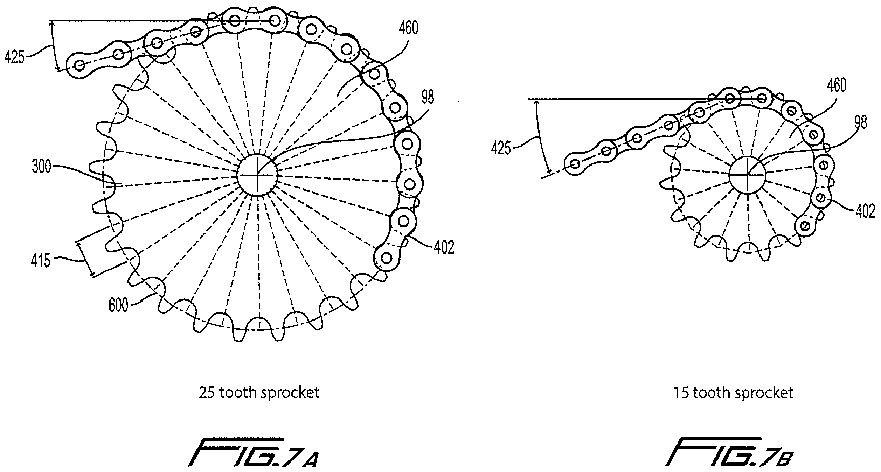

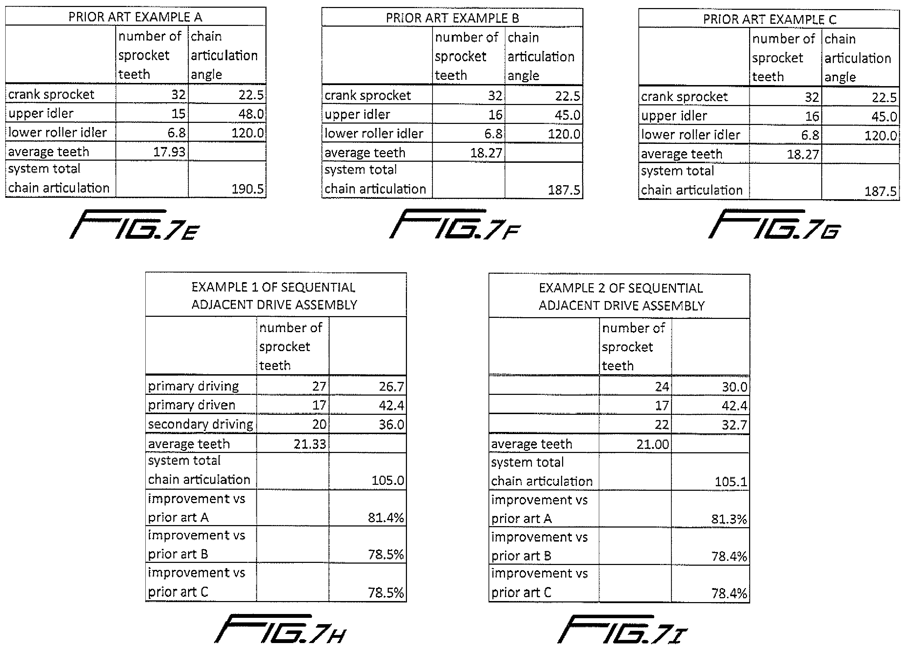

Referring now to FIGS. 7A and 7B, a sprocket 460 has a pitch circle diameter 600 that is defined in a 2D side view by tracing a circle with the circle's center point at the rotation axis 98 of the chain sprocket 460 and the diameter being circumscribed on a polygon having the same number of sides as teeth 462 in the sprocket 460 and a chain pitch 415 that corresponds with the pitch of a selected compatible chain.

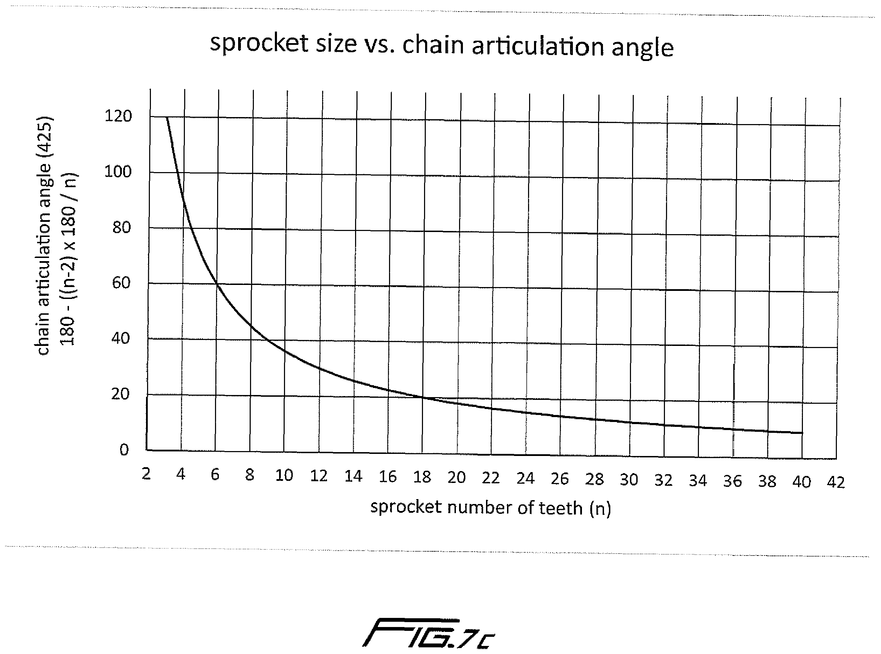

Referring now to FIG. 7C, a graph is illustrated that shows as sprocket 460 number of teeth 462 increase (shown on the X axis), chain articulation angle 425 (shown on the Y axis) decreases.

Referring now to FIGS. 7E-7I, improvements in total combined system chain articulation angle 425 of the sequential adjacent drive assemblies described herein as compared to prior are examples are shown. The prior art examples are bikes that are selling in the marketplace as of 2021. The charts show that the examples of the sequential adjacent drive assemblies have a greater number of average sprocket teeth than the prior art examples. Using the formula shown on the Y axis of FIG 7C, the chain articulation angle for embodiments of the sequential adjacent drive assemblies are compared to the prior art examples. The comparisons assume that each example will use the same rear sprocket and therefore that sprocket is omitted to normalize the results. The examples also all have equivalent overall gear ratios and therefore gear meters at the wheel. The calculation clearly illustrates that examples of the sequential adjacent drive assemblies described herein improve in overall chain articulation angle by 78.4 to 80.5% when compared to the examples from the prior art having equivalent overall gear ratios and gear meters.

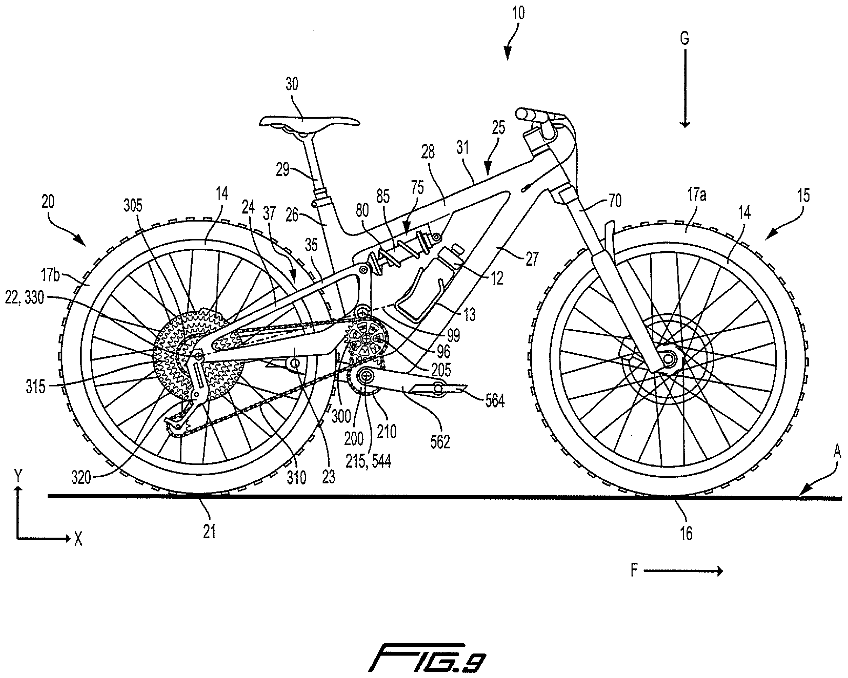

Referring now to FIG. 9, 10, and 13, side views are illustrated of alternate embodiments of a cycle 10, including a frame 25 and the sequential adjacent drive assemblies which are located on a surface, such as ground A. The frame 25 includes an interconnected top tube 28, downtube 27, and seat tube 26. A suspension assembly 37 comprises a wheel carrier 35, a shock absorber 75, a spring 80, and a damper 85 with the wheel carrier 37 being operably attached to the front triangle 31 at a fixed pivot 96.

The wheel carrier 35 includes a dropout, a chainstay 23 and a seatstay 24. The combination of the top tube 28, the downtube 27, and the seat tube 26 forms a front triangle 31. At the front of the frame 25, a fork 70 is operably connected to a head tube. The fork 70 connects to a front wheel 15 comprising a front tire 17a, a rim 14, and a front hub. The front tire 17a contacts the ground A at a front contact patch 16. At the rear of the wheel carrier 35, the seatstay 24 and chainstay 23 operably connect to a dropout which operably connects to a rear wheel 20 comprising a rear tire 17b, a rim 14, and a rear hub. The rear wheel 20 rotates around a rear wheel rotation axis 22, and the rear tire 17b contacts the ground A at a rear contact patch 21. The rear wheel rotation axis 22 is co-located with a secondary driven sprocket rotation axis 330. The frame 25 further supports a seatpost 29 which is oprably connected to a saddle 30. A bottle cage 13 may optionally hold a bottle 12. A lower chain distance to BB center 605 is measured as the perpendicular distance from the bottom of the slack side 452 of the secondary drive chain 310 to the bottom bracket spindle axis 544. A driving force line 99 is illustrated coincident to the rear wheel rotation axis 22 and the wheel carrier fixed pivot 96.

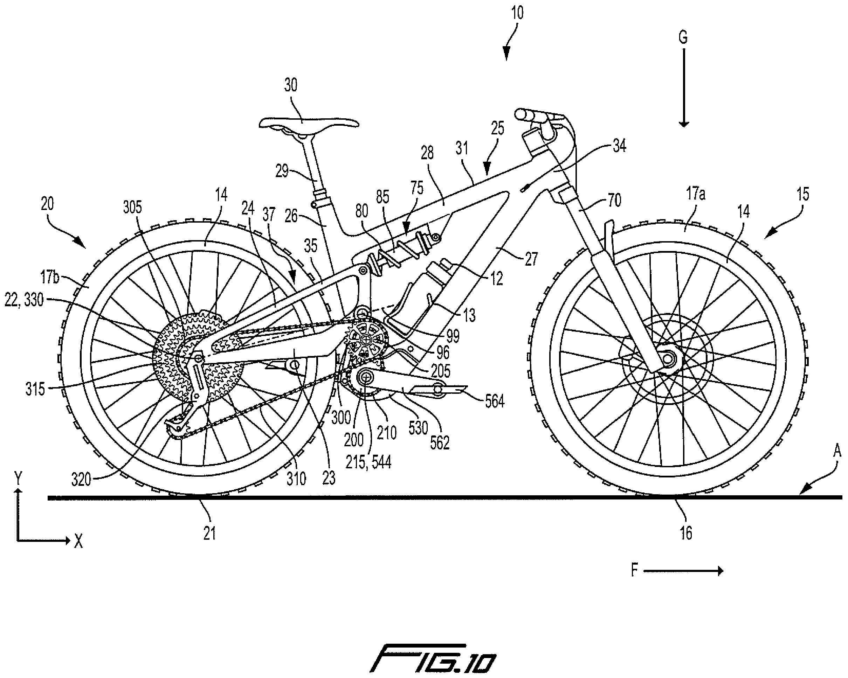

Referring now to FIG 10, the frame 25 further includes a mid-drive 530 electric motor system.

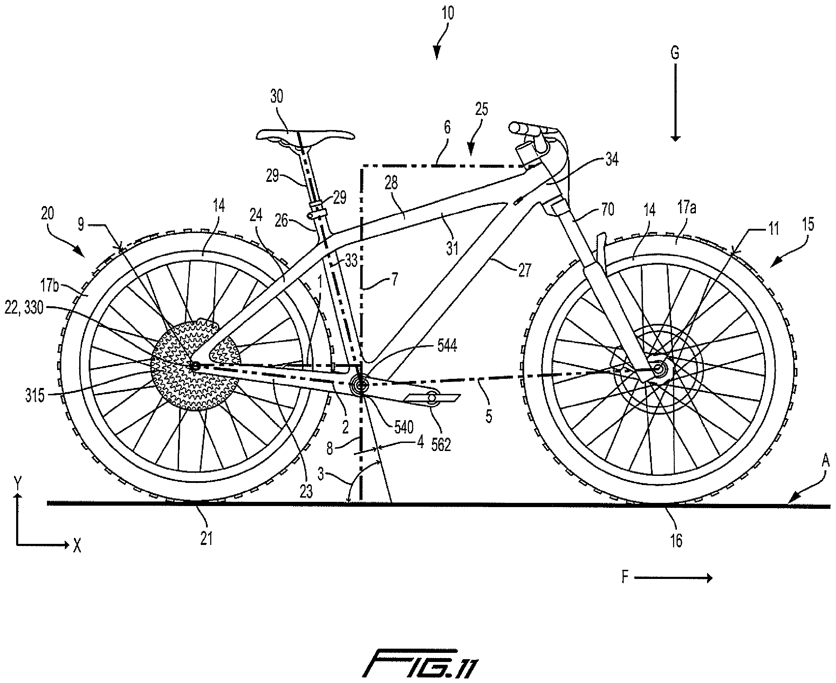

Referring now to FIG. 11, a schematic side view is shown of a cycle 10 located on a surface, such as ground A. The cycle 10 includes a top tube 28, a downtube 27, a seat tube 26, a chainstay 23 and a seatstay 24. The combination of the top tube 28, the downtube 27, and the seat tube 26 form a front triangle 31. At the front of the frame 25, a fork 70 is connected to the head tube 34. The fork oprably connects to a front wheel 15 comprising a front tire 17a, a rim 14, a front wheel radius 11, and a front hub.

The front tire 17a contacts the ground A at a front contact patch 16. On a cycle 10, there is benefit to maintaining stable cycle frame 25 geometry during cornering. In direct drive and idler cycles, the horizontal distance between a bottom bracket spindle axis 544 and a rear wheel rotation axis 22 is known as horizontal chainstay length 1, and the aligned distance between the bottom bracket spindle axis 544 and a rear wheel rotation axis 22 is known as aligned chainstay length 2 in the art.

Horizontal chainstay length 1 is an important dimension in the design of the cycle. When viewed in 2D with the cycle on flat level ground, a straight line drawn on the center plane of the rear wheel 20 (which includes the rear tire 17b, the rim 14, and the rear wheel radius 9), with the first point located directly vertical of the rotation axis of the front chainring and parallel to the ground, and the second point located at the rotation axis of the rear wheel 20 defines the horizontal chainstay length 1.

The front end of the cycle 10 is geometrically defined in part by several measurements including a reach 6 which is measured as the horizontal distance from the bottom bracket spindle axis 544 to the center of the journal that locates the fork at the top of the head tube, a stack 7 which is measured as the vertical distance from the bottom bracket spindle axis 544 to the center of the journal that locates the fork at the top of the head tube, and front center 5, which is measured as the aligned distance between the bottom bracket spindle axis 544 and the front wheel rotation axis. The seat tube 26 has a central seat tube axis 33 that is co-located with the center of the seatpost 29 and located by the seat tube 26. The saddle 30 is located in space by the seatpost 29, which is in turn located in space by the seat tube 26. The seat tube 26 location is geometrically defined by two measurements including a seat tube angle 3 which is the angle between the seat tube axis 33 and the ground A, and a seat tube offset 4 which is the perpendicular distance between the seat tube axis 33 and the bottom bracket spindle axis 544.

The bottom bracket spindle rotation axis 544 is located at the center of the bottom bracket spindle of the bottom bracket 540, which is operably connected to cranks arms 562 and is also operably connected to the front triangle 31. The location of the bottom bracket spindle axis 544 is geometrically defined by a bottom bracket height 8, which is the vertical distance from the ground A to the bottom bracket spindle axis 544.

For most mountain bikes designed for adult riders, horizontal chainstay length 1 measurements of 415-460 mm are appropriate, with many sizes falling between 430-440 mm. Some other mountain bikes designed for adult riders have a horizontal chainstay length 1 measurement of 355-550 mm. Small variations in horizontal chainstay length 1 can have a significant effect on performance, with this measurement being an important number reviewed in most bike fit evaluations before purchase. Varying the horizontal chainstay length 1 affects the weight distribution of the cycle. For example, a shorter horizontal chainstay length 1 will provide greater load at the rear wheel contact patch 21, and a longer horizontal chainstay length 1 will provide less load at the rear wheel contact patch 21. A variation of 4 mm in horizontal chainstay length 1 can have a significant effect on the balance of a cycle 10 and can completely change the personality of a cycle, making it feel "twitchy" or "stable" in rider vernacular. Shorter aligned chainstay lengths 2 are generally preferable by riders, but packaging constraints do not always allow cycle designers to achieve shorter aligned chainstay lengths 2, for a design with all other measurements fixed, a shorter horizontal chainstay length 1 will feature more load on the rear wheel 20, and a longer horizontal chainstay length 1 will feature less load on the rear wheel 20.

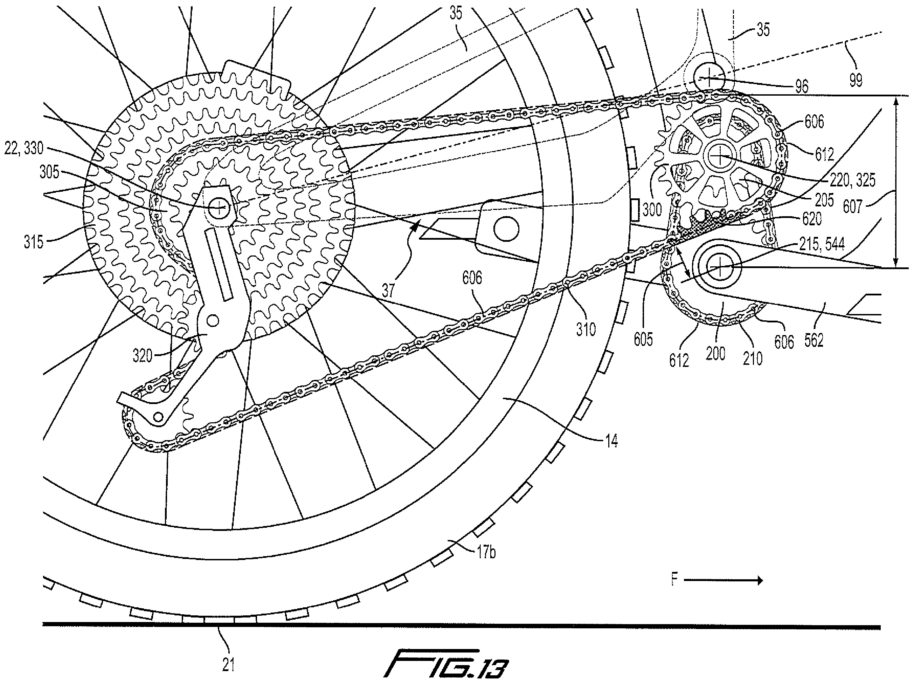

Referring now to FIG. 13, a tension side radial chainline tangent to BB center 607 is measured as the aligned distance from the bottom bracket spindle axis 544 to the tangent point of the chain pitch line 606 on the tension side of the chain and pitch circle diameter 600 of the secondary drive sprocket 300.

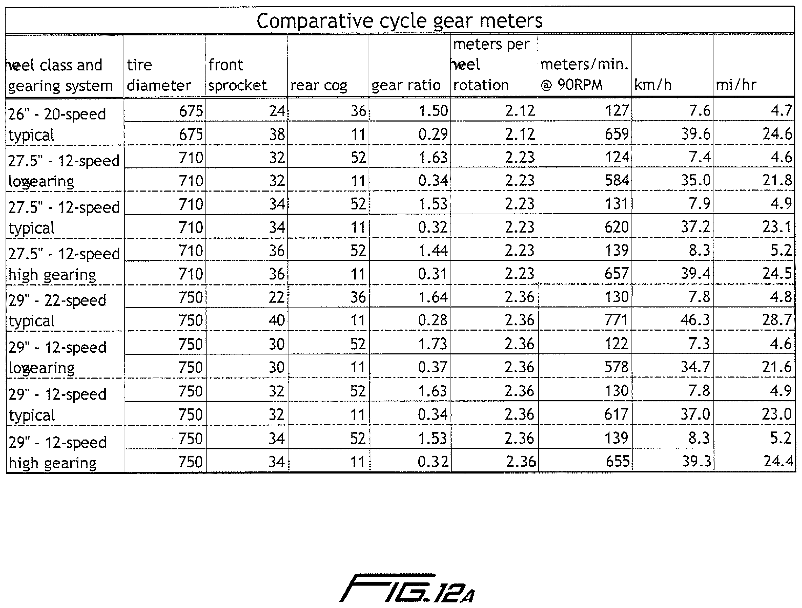

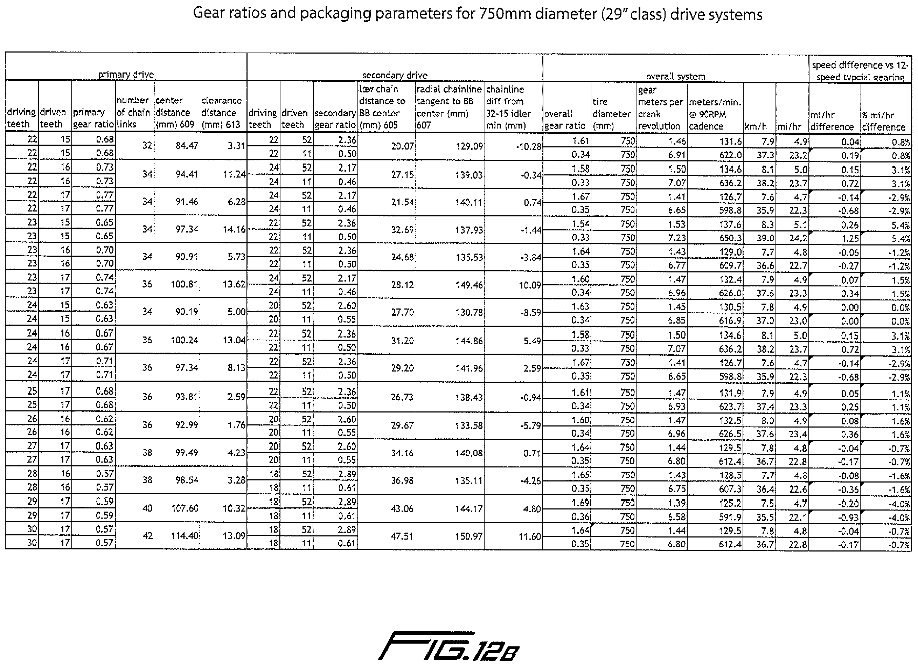

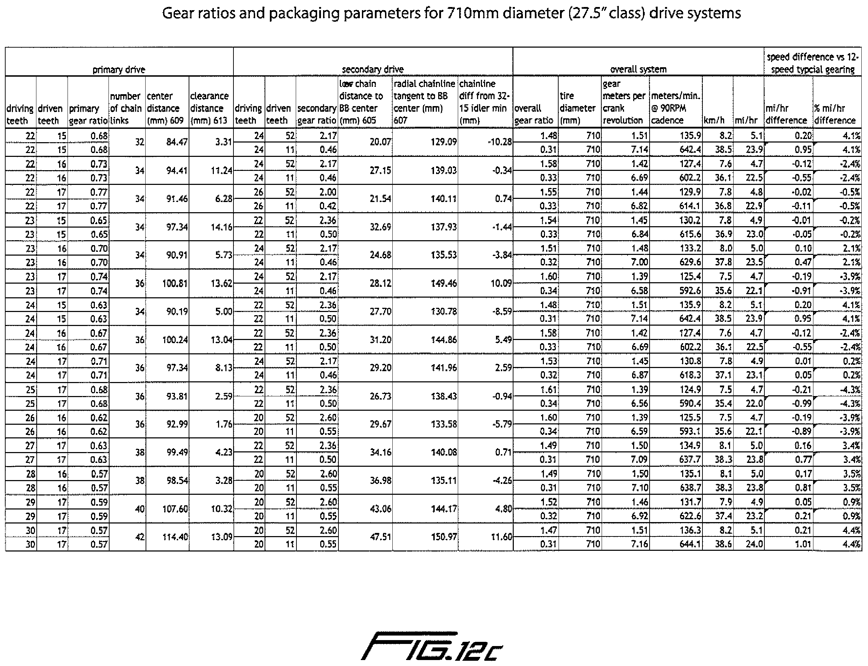

Referring now to FIGS. 12A, 12B, and 12C, relationships between gear ratios and gear meters are shown. In FIG 12A, comparative gear ratios and gear meters for typical wheel sizes and typically associated gearing are calculated. Using the teaching expected gear meters for a cycle using various tire diameters, appropriate equivalent gearing of the present invention can be developed. FIGS 12B and 12C are calculations of gear ratios for 29" class and 27.5" class diameter wheels respectively. The calculations are developed taking into account multiple factors and packaging constraints including lower chain distance to BB center 605, tension side radial chainline tangent to BB center 607, clearance distance 613, and center distance 609, and improving on measurables including overall system chain articulation angle 425 while employing performance advantageous strategies such as using odd numbered sprockets 460 with a chain having an even number of links in the primary drive and using a secondary drive sprocket having an even number of teeth to employ a narrow-wide chainring technology.

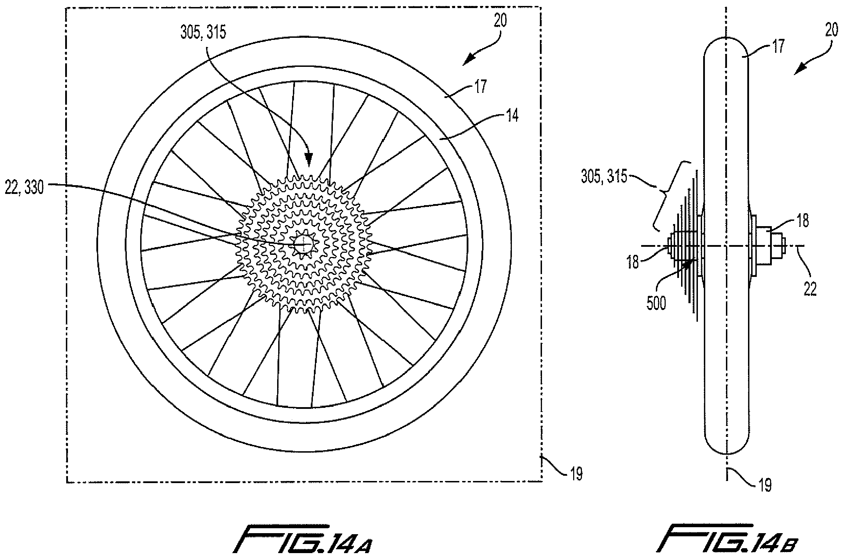

Referring now to FIGS. 14A and 14B, the rear wheel 20 includes a rear wheel rotation axis 22, a rear tire 17b, and a rear tire plane of symmetry 19. The rear tire plane of symmetry 19 is located at the lateral center plane of the rear tire 17, and perpendicular to the rear wheel rotation axis 22. A rear wheel 20 in some embodiments can comprise one or more of the parts selected from a group consisting of a rim 14, a rear tire 17b, rear hub 18, spokes, a tube, a sealant, a tape, a secondary driven sprocket 305, rear freewheel 500, cassette 315, and other components.

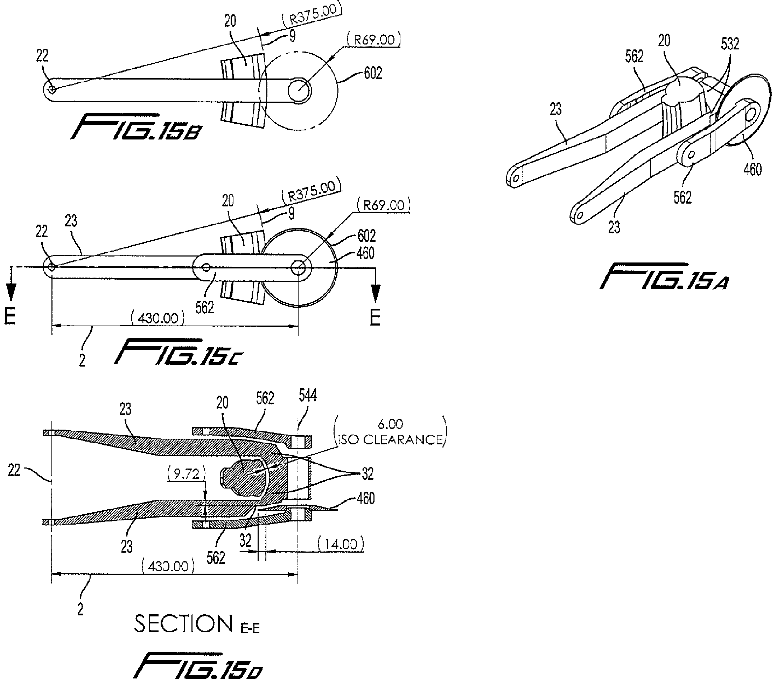

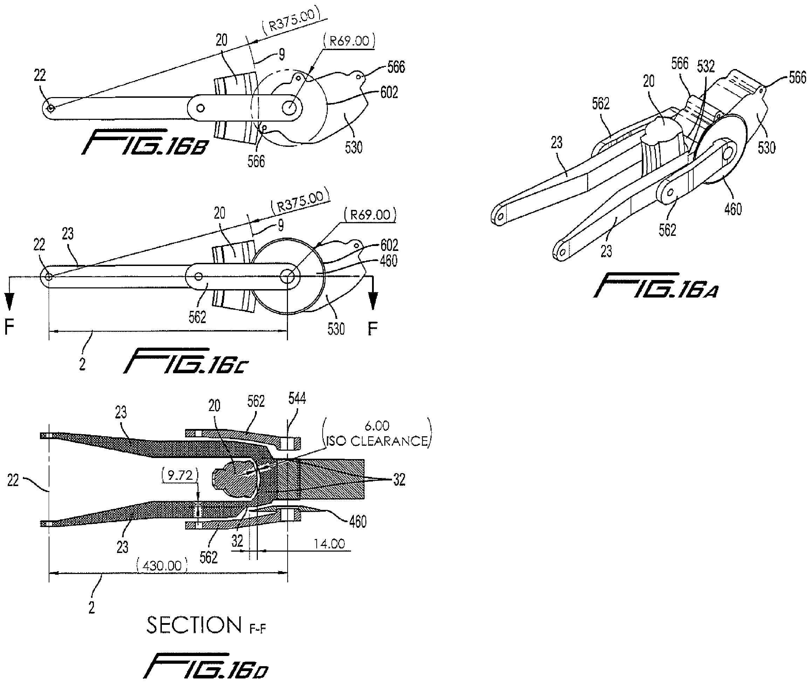

Referring now to FIGS. 15A-15D and 16A-16D, the rear wheel 20 has a rear wheel radius 9 with its center located at the rear wheel rotation axis 22. The outer perimeters of the crankarm 562, a sprocket 460 having a maximum circle diameter 602, and the rear wheel 20, which includes the rear tire 17b, define the maximum section volume possible for a structure including the chainstays 23 and a chainstay yoke 32 connecting a frame or a wheel carrier to the rear wheel rotation axis. The chainstay length 2, in part, drives the location of the rear wheel 20 in relation to the bottom bracket spindle axis 544 and therefore constrains the available volume for a chainstay yoke 32 structure. In these figures, which illustrate one example, the rear wheel radius 9 is 325mm which is appropriate for a 29" wheel class tire, the chainstay length 2 is 430mm, and the sprocket 460 maximum circle diameter 602 is 138mm which is equivalent to a 32 tooth chainring having a ½ inch pitch. Although illustrated in the style of a hardtail or URT (Unified Rear Triangle rear suspension) style frame where the bottom bracket 540 is structurally directly connected to the chainstays 23, the same structural constraints exist for cycles where a wheel carrier 35 comprises the chainstays 23 and the bottom bracket 540 is not directly connected to the wheel carrier 35.

Turning now to FIGS. 16A-16D, a mid-drive 530 electric drive motor is illustrated along with the same structural layout shown in FIGS. 15A-15D. The mid-drive 530 creates further packaging constraints with regards to locating the rear wheel 20 in relation to the bottom bracket spindle axis 544. The motor mount 566 is nearly touching the outer perimeter of the tire for the typical mid-drive 530 and for the 430mm chainstay length 2.

Cycles today are largely classified by their approximate tire size, for example 20" 26" 27.5" and 29" bicycles are all common classes of cycles today. Cycles use tires to maintain grip with the ground. Tires in general develop the greatest traction with the ground when the load at the contact patch is constant. Variation in contact patch load can be detrimental to traction. On a cycle, one of the environments most important for maintaining traction is during cornering. Therefore, on a cycle, there is benefit to maintaining as constant as possible load at the tire to ground contact patch during cornering. When a rider traverses corners including rough terrain on a cycle, rear wheel suspension is useful to provide compliance at the contact patch, therefore minimizing the variation in load at the tire and providing increased rear wheel to ground traction over alternatives. Tire sizes, especially those for mountain bikes have increased over time. In the early 2000's, a 26" designated tire with an unladen diameter of about 670mm and a tread width of about 55mm was a commonly used size. In 2020, a common size for a mountain bike tire has grown to a 29" designation with an unladen diameter of about 750mm and a tread width of about 65mm. The current larger diameter and wider tires allow riders to use less air pressure than in the past, which increases tire contact patch area and can provide more traction than tires of the past. However, larger tires create packaging challenges, as riders have not appreciably increased in size over the same timeframe and therefore still require similar frame geometry fitment in 2020 as they did in the early 2000's. Consequently, chainstay lengths at 430mm in 2020 are similar to those of the early 2000's but the tire widths have increased by 10mm (18%) and unladen tire radii have increased by 40mm (12%). The clearance issues between the rear tire and front chainring, which constrain the locations and sizes of parts including chainstay yokes and chainstays, are among the most time-consuming areas to design around in a new bicycle design.

In most forms of riding and racing of cycles, corner entry speed defines how fast and stable a rider can traverse a corner. Tire traction is a function of minimizing load variation in the tire, which is therefore driven in large part by how much weight the rider is transferring to the wheel tire system. When horizontal chainstay lengths 1 vary greatly, it is difficult for the rider to move their center of gravity quickly enough to maintain constant tire load. In reference to FIGS. 1 and 2, suspensions known as high pivot suspensions, with entirely rearward axle paths 1038 and those suspensions forced into extremely high fixed pivot 1096 locations due to chainring packaging constraints will feature rapid and unstable changing of their horizontal chainstay length 1, and therefore experience deficient cornering traction. In fact, this poor cornering performance phenomena has been observed and reported on by users of cycles with high pivot suspensions, and which the present invention solves.

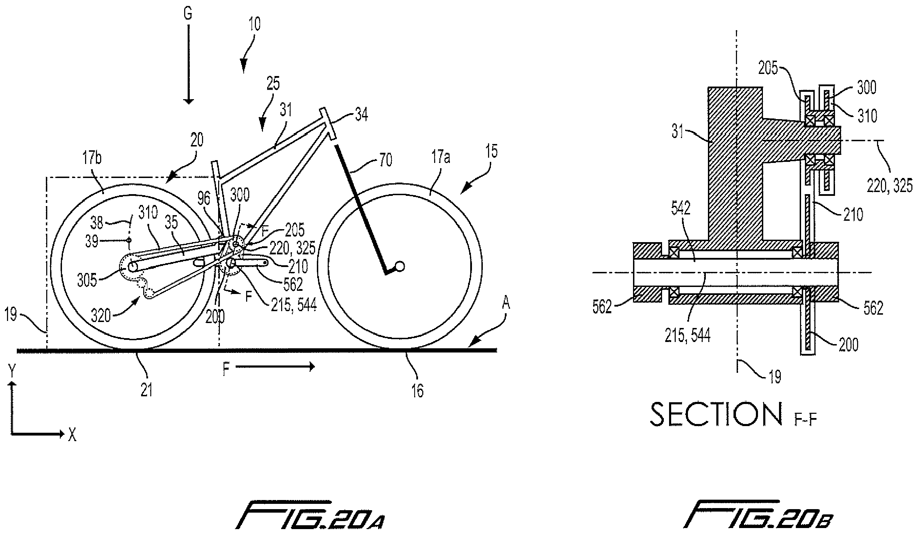

Turning now to FIG. 20, in cycles comprising the sequential adjacent drive assemblies described herein, by using an axle path 38 with an inflection point 39, horizontal chainstay length 1 measurement can be stabilized when the suspension is displacing and the rear wheel rotation axis 22 is cycling through its vertical rear wheel displacement passing through the axle path 38 inflection point 39. Suspension cycles typically see vertical rear wheel displacement between 20% and 90% during cornering, with the majority of that cornering happening closer to 50%-70% displacement. By tactically locating the inflection point 39 such that it is placed between 40% and 80% of total vertical rear wheel displacement, as is possible in the disclosed sequential adjacent drive assemblies, a more stable horizontal chainstay length 1 can be maintained during cornering, therefore resulting in less load variation in the tire and maximizing traction. As a result, the sequential adjacent drive assemblies described herein advantageously increase in traction during cornering and therefore produces better overall suspension performance and results in a better user experience. The inflection point 39 is a point on the axle path 38 where the axle path 38 shifts in an X direction (horizontal in the figures) from forward F to rearward movement or rearward to forward F movement (relative to a fixed point on the frame) and measured when the suspension is cycled from full extension to full compression in the Y direction (vertical in the figures) while the cycle 10 frame 25 is held fixed in space relative to flat level ground A that is parallel to the X direction and perpendicular to gravity G and while the fork 70 remains uncompressed.

Generally, a gear ratio range encompassing 0.35 and 1.6 is typical for wide range cassette 29" class rear wheeled mountain bikes and electric mountain bikes. To achieve this ratio range, typical bicycles using a single front chainring and rear derailleurs and nine or more rear speeds use a front chainring size of 32-38 teeth, with larger sizes typically paired with smaller diameter rear wheels and vice versa. These chainrings are operably and rotatably mounted to a bottom bracket. In most 29" wheel compatible mountain bikes, the chainring size is limited in maximum number of teeth due to rear tire and chainstay yoke clearance issues. Some manufacturers have gone as far as to implement nonstandard rear hub spacing in an effort to shift the entire chainring outboard to partially address the clearance issues. These wider rear hub spacings, known as "boost" and "superboost plus" require custom frame designs and in some models the addition of typically fiddly additional spacers to manipulate the lateral chainline into a position where the derailleur system will function properly.

Derailleurs are generally more advantageous than internal gear hubs. Internal gear hubs have significant drawbacks when compared to derailleurs. Internal gear hubs are more expensive than derailleurs, and at 1550-1820g weight are significantly heavier than derailleurs, generally 5.8 to 6.9 times heavier than an equivalent derailleur. This extra weight of the gear hub, when attached to the wheel carrier increases unsprung mass and therefore decreases suspension performance. Internal gear hubs have fewer gears than derailleurs which means that the rider may not be able to find the ideal speed for the terrain that they are traversing, and at the same time most internal gear hubs have less range than derailleur systems, with a typical 1550g weight Shimano Alfine^{®} 11 speed gearhub having 300-410% overall gear range. Even the widest range gear hub, the heavy 1820g weight Rohloff Speedhub^{®} has 14 gears and a total range of 526% which on paper seems to rival derailleurs but in reality, the jumps between gears are uneven and poorly spaced out, making for a less than ideal user experience. Internal gear hubs are inefficient and noisy, as they use gears that are constantly in mesh to allow for ratio variation. Internal gear hubs are also difficult to shift under load, the rider must reduce force on the cranks to shift, otherwise damage to the gears can occur. This requirement to reduce pedaling force when shifting can be a major detriment especially when climbing, where any loss of power could cause stalling on the hill. Internal gear hubs are not easily serviceable, they require difficult maintenance that typically requires complex disassembly and specialized tools. This servicing is essentially impossible for a typical consumer to do.

Comparatively, derailleurs have significant advantages when compared to internal gear hubs. Derailleurs are more cost effective then internal gear hubs. A Sram Eagle^{®} 12-speed mountain derailleur weighs 265g generally 5.8 to 6.9 times lighter than a replacement gear hub. This light weight of the derailleur, when attached to the wheel carrier is an acceptable increase in unsprung mass and therefore does not dramatically affect suspension performance. Derailleurs have more gears to select from than typical gear hubs, which means that the rider will likely be able to find the ideal speed for the terrain that they are traversing. At the same time most derailleurs have more range than gear hub systems, with the typical Sram Eagle^{®} example having a 520% overall gear range and at a light 265g weight. Derailleurs are more efficient than internal gear hubs as the drive chain is only engaged with one sprocket at a time. With modern advances in sprocket tooth shape and chain design, the elements such as dirt, mud, and water have minimal effect on performance. Derailleurs are also quieter than internal gear hubs, which has value for riders who are enjoying nature and don't want to hear the grinding of gears as they pedal. Additionally, derailleurs have even gear jumps, so the effort needed for each gear is predictable by the riders, and they can be shifted under load, which is an advantage when trying to maintain momentum on a climb. Derailleurs require almost no service, and adjustment is easy and externally accessible. With some of today's electronically controlled derailleurs, adjustment has been eliminated completely and the systems are self-adjusting.

There is a significant performance and usability benefit to having a cycle geometry with a short chainstay length, preferably in the 430 mm range, a 29" class rear wheel in the range of 750 mm actual unladen diameter, using a gear ratio range encompassing 0.35 and 1.6, while using off-the-shelf available rear cassettes. This combination of attributes requires the use of a 32T chainring in a direct drive cycle, which is the one of the most common sizes used for current 29" class cycles. A 32T chainring has a radius from its rotation axis to the tip of the tooth of about 69 mm. The 750 mm diameter rear wheel has a radius of about 375 mm. Simple math can illustrate the issue here for a 430mm chainstay length cycle - 375 mm + 69 mm = 444 mm, so when using a 32T chainring with a 750 mm diameter rear wheel and a 430 mm chainstay length, there will be at least 14 mm overlap between the rear wheel and front chainring, and this does not account for any additional clearance for a chain or debris clearance, this is the minimum dimension. This overlap exists with bikes that use the direct drive type, idler drive type, and some jackshaft type drives.

On a cycle, chainstays can be practically routed in two ways, either direct routing between the tension side and slack side of the direct drive chain, or indirect routing above the tension side of the direct drive chain (called an elevated chainstay in the art). The elevated chainstay design has not found favor in cycling due to its indirect routing and the associated structural challenges associated with that routing. The more direct and common method of directly routing the chainstay between the tension side and slack side of the direct drive chain is structurally superior and many cyclists would argue more aesthetically pleasing as well. In a directly routed chainstay for a typical cycle using a using a 32T chainring with a 750 mm diameter rear wheel and a 430 mm chainstay length and meeting the ISO minimum tire clearance requirement of 6 mm, there is room for approximately an approximately 9.7 mm wide cross section chainstay yoke. (FIGS. 15A-D and 16A-D) This chainstay yoke would be mated to a chainstay tube that would have relatively modest rectangular section measuring 40 mm tall × 22 mm wide × 2.0 mm wall thickness providing an area moment of inertia of the area in a lateral direction of roughly 20,000 mm⁴. The challenge with the constraint of a 9.7 mm wide section is that the chainstay yoke would need to be 9.7 mm wide × 26 3mm tall and solid in section to have an equivalent 20,000mm⁴ area moment of inertia in the same lateral direction. This 263 mm tall dimension is not possible from a packaging standpoint, as the distance available to fit a chainstay yoke section between the tension side and slack side of the chain is roughly 130 mm, or less than half of the required height to achieve the desired area moment of inertia. Additionally, the amount of material and therefore cost and weight of the solid 9.7x263 mm section is dramatically greater than the same length of 40 mm tall × 22 mm wide × 2.0 mm wall thickness, in this comparison the solid 263 mm section has more than 10X the material of the 40 × 20 mm × 2 mm tubular section. In practice, cycles are designed with compromised section areas in chainstay yokes due to the constraints of tire clearance, chainstay lengths, and chainring clearance. An exceptionally large section chainstay yoke would be in the range of 9.7 mm × 65 mm, resulting in an area moment of inertia of the area in a lateral direction of roughly 4,950 mm⁴, or 25% of the adjacent chainstay tube.

Packaging issues surrounding clearance between rear tires and chainstay yokes now drive close to 70% of the total time spend developing a new frame model. Additionally, to solve the clearance issues between tire and chainring in a direct drive cycle using a direct routed chainstay, difficult, complex, and expensive manufacturing techniques must be used. For carbon composite frames, any cross section that is not tubular in construction must be built using a process known as compression molding. Compression molding requires complex hybrid bladder forming tooling with removable sections called inserts that can apply mechanical pressure to a precisely controlled volume of composite fibers to achieve a laminate with the proper mechanical properties. This compression molded volume is almost always adjacent to a tubular chainstay in practice. The challenges with building this type of construction repeatably are numerous and require complex and costly steel tooling similar to injection molding tooling, and skilled labor to develop and produce parts using this type of tooling. The development process is exceptionally long for parts that include both compression molded solid volumes and bladder formed tubular sections in the same monocoque, sometimes taking a year or more to achieve acceptable results. This process is costly for the product company in lost opportunity cost, overhead cost, and direct cost, but the packaging constraints are such that there are no other options.

For metal cycle frames, the challenges are similar. Thin cross sections typically require solid pieces of metal at the chainstay yoke. For aluminum cycles, these yoke cross sections are usually forged from 6061T6 aluminum and welded to tubular chainstay sections. For steel and titanium bikes, a thick plate style yoke is a common design, with less common versions using forgings or additively manufactured sections to support chainstay tubes. No matter the material choice for the cycle frame, the challenges are similar. There is too little room to package a chainstay yoke with an appropriate area moment of inertia to efficiently support a typical chainstay tube.

E-bikes exacerbate the packaging issues as the popular mid-drive motors are far larger in size than their analog counterparts. In fact, a typical cycle bottom bracket has a 23 mm-25 mm radius, whereas an e-bike mid-drive motor system has a radius measured on a line between the bottom bracket center and rear wheel center of 44 mm and a maximum dimension measured to the motor to frame mount which is located behind the motor of over 67 mm. With e bike mid-drives, there is a further loss of 21-43 mm of precious chainstay yoke packaging space. In fact, with a popular e-bike mid-drive using a 750 mm diameter rear wheel and attempting a 430 mm chainstay length, there is less than 1.5mm clearance between the rearmost motor mount and the tire when the chainstay length is at its minimum dimension, therefore requiring a longer chainstay length to achieve the ISO required 6mm minimum tire clearance and consequently a compromise in cycle performance. The packaging constraints of e-bikes again require difficult, complex, and expensive manufacturing techniques to address, which are costly for the product company in lost opportunity cost, overhead cost, and direct cost - but the packaging constraints are such that there are no other options.

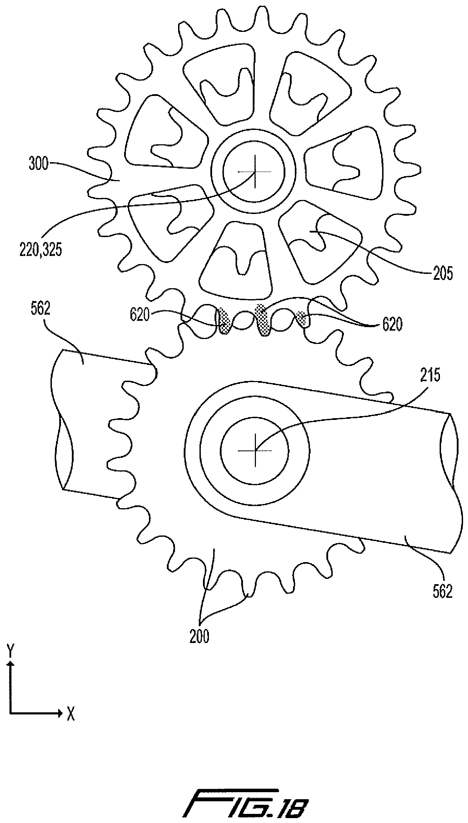

Turning again to the figures, in particular FIGS. 3, 4A, 4B, 8A-11 and 13-20, a sequential adjacent drive assembly for a rear suspension cycle 10 includes a cycle frame 25 and a suspension assembly 37 that comprises a wheel carrier 35, a shock absorber 75, a spring 80, and a damper 85 operably attached to the cycle frame 25. The suspension assembly 37 includes the wheel carrier 35 and a wheel carrier fixed pivot 96.

A primary drive assembly 200, 205, 210 includes a primary drive sprocket 200 having a primary drive sprocket rotation axis 215, a primary driven sprocket 205 having a primary driven sprocket rotation axis 220, and a primary drive chain 210 operably connecting the primary drive sprocket 200 and the primary driven sprocket 205. The primary drive assembly 200, 205, 210 includes a primary tension side 450a and a primary slack side 452a.

A secondary drive assembly 300, 305, 310, 315, 320 is operably connected to the primary drive assembly 200, 205, 210. The secondary drive assembly 300, 305, 310, 315, 320 includes a secondary drive sprocket 300 having a secondary drive sprocket rotation axis 325, a secondary driven sprocket 305, which in some embodiments may take the form of a cassette 315, and a secondary drive chain 310 operably connecting the secondary drive sprocket 300 and the secondary driven sprocket 305. The secondary driven sprocket 305 rotates around a secondary driven sprocket rotation axis 330 which is co-located with the rear wheel rotation axis 22. In some embodiments, the secondary drive chain 310 routes through a rear derailleur 320. The secondary drive assembly 300, 305, 310, 315, 320 includes a secondary tension side 450b and a secondary slack side 452b.

A sprocket 460 can comprise one or more or fewer of the primary drive sprocket 200, primary driven sprocket 205, secondary drive sprocket 300, secondary driven sprocket 305, cassette 315, and subcomponents of the rear derailleur 320.

A rear wheel 20 is operably attached to the cycle frame 25 and the secondary driven sprocket 305 is operably connected to the rear wheel 20. The wheel carrier fixed pivot 96 is located separately from the primary driven sprocket rotation axis 220 and the secondary drive sprocket rotation axis 325. More specifically, the wheel carrier fixed pivot 96 in the illustrated embodiments is located above and aft of the secondary sprocket rotation axis 325 (see e.g., FIG. 13). In other embodiments, the wheel carrier fixed pivot 96 may be located above and forward of the secondary sprocket rotation axis 325.

The primary drive sprocket 200 transmits force to the primary drive chain 210. The primary drive sprocket 200 rotates around the bottom bracket spindle axis 544 and is operably connected to, and rotatably driven by, cycle crank arms 562 which can have a pedal 564 attached such that a rider can impart force on the pedal 564. In certain embodiments, the primary drive sprocket 200 is connected to a crank arm spider via a bolted connection. Cycle drivetrains include a crank spindle, which can also be described using the term bottom bracket spindle or shortened to spindle 542. This differentiation in terms exists because purely human powered pedal cycles have bottom brackets which can comprise any combination of bearings, spindles, bottom bracket cups, seals, and other components, whereas mid-drive e-bikes have the crank spindle integrated into the mid-drive 530 motor system. Functionally, the bottom bracket spindle and crank spindle collectively known as spindles 542 perform substantially the same functions. In practice a bottom bracket spindle is always a crank spindle, but a crank spindle may not always be used in conjunction with a standalone bottom bracket. The crankarm spider can be connected by means that provide torque transfer between a crank spindle and one or more crankarms 562. In certain embodiments, the primary drive sprocket 200 is connected to a crankarm 562 via a splined and/or bolted connection. In certain other embodiments, the primary drive sprocket 200 is connected to the crank spindle 542 by means that provide torque transfer between the drive sprocket 200, the crank spindle 542, and one or more crankarms 562.

The primary driven sprocket 205 has a rotation axis 220 around which it can rotate. The primary driven sprocket 205 is located coaxially and adjacent to the secondary drive sprocket 300, and at a separate location from the primary drive sprocket 200 and secondary driven sprocket 305. The primary driven sprocket 205 engages with a primary drive chain 210, belt, and/or beltchain 400. The primary drive chain 210, belt, and/or beltchain 400 and the primary driven sprocket 205 transmit force between one another, in an arrangement where torque at the primary drive sprocket 200 is converted to force at the primary drive chain 210, belt, and/or beltchain 400 and *vice versa.* The primary drive chain 210, belt, and/or beltchain 400 and primary driven sprocket 205 transmit force between one another, in an arrangement where force at the primary drive chain 210, belt, and/or beltchain is converted to torque at the primary driven sprocket 205 and *vice versa.* The primary drive sprocket 200 and the primary driven sprocket 205 maintain a fixed primary drive ratio therebetween while the primary drive sprocket 200 is transmitting torque to the primary driven sprocket 205 through the primary drive chain 210, belt, and/or beltchain. 400

A fixed primary drive ratio advantageously produces a mechanically simpler, lighter weight, less prone to failure, simpler to maintain, and less costly to manufacture and maintain primary drive assembly than cycles using variable primary drive ratios.

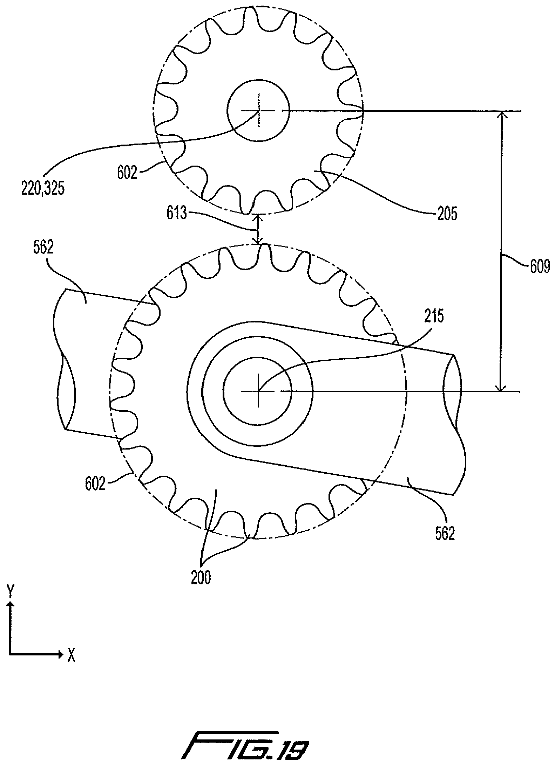

A fixed primary drive ratio produces further advantages over variable primary drive ratios via changeable sprockets and using an adjustable center distance 609 (FIG. 19) that can be adjusted less than 0.3mm, 1mm, 2mm, 3mm, 4mm, 5mm, 6mm, 7mm, 8mm, 9mm, or 10mm. Embodiments of the current invention using fixed primary drive ratios only require enough center distance adjustment to adjust for chain length change due to chain stretch that occurs during long periods of use, and in some embodiments may use no center distance adjustment. Using no center distance adjustment would in practice result in a shorter useful life for the primary drive sprockets and chain, which may be acceptable in some products. For higher performance products and those intended for longer service lives, adjustable center distances may be of value. The amount of center distance adjustment needed to make a meaningful change in chain length to offset the effects of chain stretch can be seemingly small, with a center distance adjustment of 0.2mm making a meaningful impact in cycles using a standard 12.7mm pitch chain. Other chain pitches such as shorter or longer chain pitches may benefit from smaller or larger ranges of center distance adjustment when using fixed primary drive ratios. Preferred embodiments of the invention including fixed primary drive ratios can be mechanically simpler, lighter weight, less prone to failure, simpler to maintain, and less costly to manufacture and maintain than cycles using variable primary drive ratios because the required center distance adjustment and therefore the associated mechanical components required can be smaller, lighter, more cost effective to produce.

In certain embodiments, the primary drive sprocket 200 has more teeth than the primary driven sprocket 205. The arrangement of the primary drive sprocket 200 having more teeth than the primary driven sprocket 205 describes a gear ratio condition called overdrive and provides a rotational speed increase and torque decrease at the primary driven sprocket 205 and in relation to the primary drive sprocket 200, which is a desirable arrangement for crank driven vehicles like bicycles. In certain other embodiments, the primary driven sprocket 205 has fewer teeth than the secondary drive sprocket 300.

In some embodiments, the primary drive sprocket 200 may have an equal number of teeth to the primary driven sprocket 205. In some embodiments, the primary driven sprocket 205 may have an equal number of teeth to the secondary drive sprocket 300, describing a gear ratio condition called a 1:1 drive. In certain other embodiments, the primary drive sprocket 200 may have fewer teeth than the primary driven sprocket 205, describing a gear ratio condition called a underdrive.

The secondary drive sprocket 300 has a secondary drive sprocket axis of rotation 325 around which the secondary drive sprocket 300 can rotate. The secondary drive sprocket 300 is located coaxially and adjacent to the primary driven sprocket 205, and at a separate location from the primary drive sprocket 200 and secondary driven sprocket 305. The secondary drive sprocket 300 engages with a secondary drive chain 310, belt, and/or beltchain. The secondary drive chain 310, belt, and/or beltchain and the secondary driven sprocket 305 transmit force between one another, in an arrangement where torque at the secondary driven sprocket 305 is converted to force at the secondary drive chain 310, belt, and/or beltchain and vice versa. The secondary drive chain310, belt, and/or beltchain and the secondary drive sprocket 305 transmit force between one another, in an arrangement where force at the secondary drive chain 310, belt, and/or beltchain is converted to torque at the secondary drive sprocket 300 and vice versa. The secondary drive sprocket 300 is operably connected to, and can transmit torque to the primary driven sprocket 205 and vice versa.

In certain embodiments, the primary driven sprocket 205 has fewer teeth than the secondary drive sprocket 300. In certain other embodiments, the primary driven sprocket 205 has an equal number of teeth to the secondary drive sprocket 300. In certain other embodiments, the primary driven sprocket 205 has fewer teeth than the secondary drive sprocket 300.

The secondary drive sprocket 300 and the primary driven sprocket 205 maintain a fixed drive ratio therebetween while the primary driven sprocket 205 is transmitting torque to the secondary drive sprocket 300.

In certain embodiments, the primary drive sprocket 200 has fewer teeth than the secondary driven sprocket 305. In certain other embodiments, the primary drive sprocket 200 has an equal number of teeth to the secondary driven sprocket 305. In certain other embodiments, the primary drive sprocket 200 has fewer teeth than the secondary driven sprocket 305.

The disclosed sequential adjacent drive assemblies produce higher efficiency than current idler drive systems because same number of sprockets are used but the disclosed assemblies are able to use larger diameter sprockets. Typical high pivot idler style bikes require the use of the same large chainring sizes as conventional non-idler drivetrains, but with the added requirement of at least one and almost always two additional idler pulleys that are in contact with the drive chain. Most idler drive cycles mount their tension side idler well above the chainring due to the best practice engineering requirements of chain drives and specifically the engineering requirements of chain drive sprocket center distance 609 spacing and minimum tooth to chain contact. The conventional idler drive cycles also use a slack side idler in close proximity to and behind the chainring in order to address the best practice engineering requirements related to minimum tooth to chain contact. During operation, a drive chain enters and exits a sprocket tangent to the pitch circle. Because sprockets are essentially multi sided polygons, when operating, the drive chain must articulate around the chain bushing 414 when the chain enters and exits the sprocket. Sprockets with more teeth ultimately have more sides in the polygon that makes up the sprocket, and due to this fact, the angle that the chain need to articulate is less when a chain is operated with a larger diameter sprocket. Thus, using sprockets with a greater number of teeth will require the chain to articulate at smaller angles. Articulating a chain requires energy, and the chain articulation angle - also called deflection angle is also known as the angle of friction in the field of chain drive engineering. Therefore, when articulation angle is reduced, efficiency losses in the chain due to articulation are reduced. The relationship between the number of teeth on a sprocket and require operable articulation of a chain is nonlinear, with significantly more articulation required when using sprockets of 15 teeth and fewer. For a human powered or electric, or hybrid vehicle like an e-bike, energy efficiency is an important and valuable consideration in design. In certain preferred embodiments, engineering all sprockets other than those in the cassette to have 16 or more teeth can provide increased efficiency over typical idler drive cycles which feature slack side and tension side idler sprockets of 15 and fewer teeth.

In the field of chain drive engineering, the recommended minimum wrap angle on the smallest sprocket in the drive is 120°, see FIGS. 7A and 7B. Wrap angle can be reduced to 90° if adequate chain tension adjustment is maintained. If chain tension is not closely maintained with less than 120° wrap, the chain can jump teeth, resulting in damage to itself and/or the sprocket. In typical idler drive cycles, there is no realistic way to directly tension the chain, so chainguides or "chain watchers" are commonly used to force contact between the chain and idler. These chainguides or chain watchers are designed to forcibly limit the radial movement of the chain in relation to the idler, thus forcing tooth to chain engagement. In practice these devices are not always reliable, resulting in frequent jammed chains or damaged drivetrain components that can present a dangerous condition if the drivetrain jams. Furthermore, an even greater issue exists for the idler type cycles in that the location of the idler must be far enough away from the chainwheel and bottom bracket center to increase chain wrap. Moving the idler too far rearward or too close to the chainwheel results in sub-optimal chain wrap on the tension side idler. In practice, idler type cycles of today feature tension side chain wraps typically less than 90 degrees and sometimes less than 50 degrees. These idler type cycles are unreliable, maintenance reliant, costly to own, and potentially dangerous as packaging constraints don't allow the best practices of chain drive engineering to be met.

The disclosed sequential adjacent drives address the issues associated with idler type bikes by implementing sequential and adjacent primary and secondary drives. The adjacent primary and secondary drives include a primary drive sprocket, a primary driven sprocket, and a secondary drive sprocket, and one or more secondary driven sprockets. A primary drive includes a primary drive sprocket, a primary drive chain, and a primary driven sprocket. A secondary drive includes a secondary drive sprocket, a secondary drive chain, and one or more secondary driven sprockets. The primary and secondary drives are operably connected in sequential and either direct or indirect manner such that torque and rotation from the primary drive is transmitted to the secondary drive via a primary driven sprocket to a secondary drive sprocket either directly or through various intermediate connections, sub connections, and/or components. Adjacent intermediate sprockets including a primary driven sprocket and a secondary drive sprocket can include a pair of sprockets mounted axially and co-rotatably such that the two sprockets co-rotate and torque can be transmitted from one sprocket to another. Adjacent intermediate sprockets including a primary driven sprocket and a secondary drive sprocket can include a pair of sprockets fabricated as a single unit such that the two sprockets co-rotate and torque can be transmitted from one sprocket to another. Adjacent intermediate sprockets including a primary driven sprocket and a secondary drive sprocket can include a pair of sprockets fabricated as a single unit and including additional functionality such as one or more bearing mount, bearing races, bearing stop, pivot, and/or rotation means, such that the two sprockets co-rotate and torque can be transmitted from one sprocket to another.

In certain embodiments, the chain wrap around the primary driven sprocket is greater than an angle selected from the range of 90 to 230 degrees. In certain embodiments, the chain wrap around the primary driven sprocket is greater than 90 degrees. In certain embodiments, the chain wrap around the primary driven sprocket is greater than 100 degrees. In certain embodiments, the chain wrap around the primary driven sprocket is greater than 110 degrees. In certain embodiments, the chain wrap around the primary driven sprocket is greater than 130 degrees. In certain embodiments, the chain wrap around the primary driven sprocket is greater than 140 degrees. In certain embodiments, the chain wrap around the primary driven sprocket is greater than 150 degrees. In certain embodiments, the chain wrap around the primary driven sprocket is greater than 160 degrees. In certain embodiments, the chain wrap around the primary driven sprocket is greater than 170 degrees. In certain embodiments, the chain wrap around the primary driven sprocket is greater than 180 degrees. In certain embodiments, the chain wrap around the primary driven sprocket is greater than 190 degrees. In certain embodiments, the chain wrap around the primary driven sprocket is greater than 200 degrees. In certain embodiments, the chain wrap around the primary driven sprocket is greater than 210 degrees. In certain embodiments, the chain wrap around the primary driven sprocket is greater than 220 degrees. In certain embodiments, the chain wrap around the primary driven sprocket is greater than 230 degrees.

In certain embodiments, the primary drive sprocket and the primary driven sprocket can be arranged such that the clearance distance 613 (FIG. 19) between the maximum circle diameter 602 of the primary drive sprocket and maximum circle diameter 602 of the primary driven sprocket is less than a measurement selected from the range of 50mm to 0.1mm. In certain embodiments the clearance distance 613 between the maximum circle diameter 602 of the primary drive sprocket and maximum circle diameter 602 of the primary driven sprocket is less than a 10mm. In other embodiments the clearance distance 613 between the maximum circle diameter 602 of the primary drive sprocket and maximum circle diameter 602 of the primary driven sprocket is less than a 15mm. In other embodiments the clearance distance 613 between the maximum circle diameter 602 of the primary drive sprocket and maximum circle diameter 602 of the primary driven sprocket is less than a 20mm. In other embodiments the clearance distance 613 between the maximum circle diameter 602 of the primary drive sprocket and maximum circle diameter 602 of the primary driven sprocket is less than a 25mm.

In certain embodiments, the primary drive sprocket 200 has 20-28 teeth or pitch diameters of 81mm-114mm. In certain other embodiments, the primary drive sprocket 200 has 14-30 teeth or pitch diameters of 57mm-122mm. In certain other embodiments, the primary driven 205 sprocket has 16-28 teeth or pitch diameters of 65mm-114mm. In certain other embodiments, the primary driven sprocket 205 has 10-30 teeth or a pitch diameter of 41mm-122mm. In certain other embodiments, the secondary drive sprocket 300 has 20-28 teeth or pitch diameters of 81mm-114mm. In certain other embodiments, the secondary drive sprocket 300 has 16-32 teeth or pitch diameters of 65mm-130mm. In certain embodiments that may be useful for off-road cycles, a secondary driven cassette 315 has a range of 11 or more sprocket sizes including a minimum and maximum size selected from the range including 9-60 teeth or pitch diameters of 37mm-245mm. In certain embodiments, the secondary driven cassette 315 has a range of 10 or more sprocket sizes including 12-48 teeth or pitch diameters of 49mm-195mm. In certain embodiments, the secondary driven cassette 315 has a range of 11 or more sprocket sizes including 11-52 teeth or pitch diameters of 45mm-211mm. In certain embodiments, the secondary driven cassette 315 has a range of 10 or more sprocket sizes including 11-58 teeth or pitch diameters of 45mm-235mm. In certain embodiments, the secondary driven cassette 315 has a range of 10 or more sprocket sizes including 10-50 teeth or pitch diameters of 41mm-203mm. In certain embodiments, the secondary driven cassette 315 has a range of 10 or more sprocket sizes including 9-50 teeth or pitch diameters of 37mm-203mm. In certain embodiments useful for, the secondary driven cassette 315 has a range of 7 sprocket sizes including 9-23 teeth or pitch diameters of 37mm-84mm, and pairing with a 10 speed or 11 speed chain having a maximum outer width of 6.4mm.

The sequential adjacent drive can be arranged such that the secondary drive sprocket 300, has a greater number of teeth than a primary driven sprocket 205. In cycles using the sequential adjacent drive where the primary drive includes and overdriving gear ratio, and where increased clearances for frame and wheel carrier structures and drivetrain components are of value, it can be advantageous for the secondary drive sprocket 300 to have a fewer number of teeth. There are advantages to using a fewer number of teeth, between 16 and 22 teeth on the secondary drive sprocket 300, when the secondary drive sprocket 300 is operably connected to a primary drive assembly including an overdrive, and where the secondary drive chain 310 will operate at a higher linear velocity than the primary drive chain 210 for any given angular velocity of the primary drive sprocket 200.

Although the use of a secondary drive sprocket 300 with a fewer number of teeth may seem counterintuitive at first, there are packaging advantages to this layout without a significant reduction in overall drive efficiency when compared to sequential adjacent drives of a roughly equivalent overall gear ratio and using a larger secondary drive sprocket 300 and an equivalent tension side radial chainline tangent to BB center 607 (FIG. 13). Specifically, when using a secondary drive sprocket 300 with fewer teeth, the lower chain distance to BB center 605 can be greater than the embodiment using a secondary drive sprocket 300 with more teeth. This can allow the secondary drive sprocket 300 to be positioned more forward on the cycle frame 25 for any given lower chain distance to BB center 605, and therefore provide more clearance behind the secondary drive sprocket 300 for suspension and structural components. This additional clearance allows for the simplification of the chainstay yoke area design results in a highly beneficial and significant savings in product development time as well as the opportunity for lighter weight and stronger products.

The adjustment of center distance 609 directly relates to the location of the tension side radial chainline tangent to BB center 607 when taking into account the pitch circle diameters 600 of the primary drive sprocket 200, primary driven sprocket 205, and secondary drive sprocket 300. Illustrated in FIGS. 13, 17, and 18, overlap 620 is an improvement over previous suspensions, especially those in the vertical rear wheel travel range of 50mm-230mm, where a wide variety of factors are concurrently balanced against each other in order to achieve the best performing product. These factors include: achieving desirable suspension performance especially during cornering and over bumps by including an axle path 38 with an inflection point 39, achieving optimized structures that are strong, lightweight, and cost effective especially in the chainstay yoke 32 area, selecting overall gear ratios that are appropriate for the terrain that the cycle is designed for FIGS 12A, 12B, and 12C, and selecting sprocket sizes that reduce the overall system total chain articulation angle 425 as illustrated in FIG. 7A and 7B, thereby increasing drivetrain efficiency. Without overlap 620, compromises to some or all of the aforementioned traits would need to be made, therefore making for an inferior performing product.

The sequential adjacent drive can be arranged such that the secondary drive sprocket 300, has a greater number of teeth than a primary drive sprocket 200. In the sequential adjacent drive where the primary drive includes and overdriving gear ratio, and the packaging constraints that drive chainstay yoke size and location are minimized and or greater vertical rear wheel travels are acceptable, it can be advantageous for the secondary drive sprocket 300 to have as many teeth as possible. The advantage of using as many teeth as possible, between 23 and 31 teeth on the secondary drive sprocket 300 is driven by the fact that when the secondary drive sprocket 300 is operably connected to a primary drive assembly including an overdrive, then the secondary drive chain 310 will operate at a higher linear velocity than the primary drive chain 210 for any given angular velocity of the primary drive sprocket 200. As the linear velocity of a drive chain increases, the rate that the drive chain engages and disengages with a sprocket increases. As a drive chain engages a sprocket, it articulates, and reduces drive efficiency in the process. Thus using a sprocket with a greater number of teeth on the sprockets engaged with the chain having the highest linear velocity will reduce the articulation angle of the drive chain and increase efficiency over a similar drive using a smaller sprocket. The arrangement of the secondary drive sprocket 300 having more teeth than the primary drive sprocket 200 provides an advantage where the secondary chain will have a reduced articulation angle which increases drive efficiency and is a desirable arrangement for crank driven vehicles like bicycles.

Important measurements that affect packaging constraints include maximum circle diameter 602 of the primary drive, primary driven, and secondary driving sprockets, lower chain distance to BB center 605, tension side radial chainline tangent to BB center 607, center distance 609, and clearance distance 613.

Maximum circle diameters 602 of the primary drive, primary driven, and secondary driving sprockets are driven by the chain pitch and number of teeth on the sprockets. Sprockets with more teeth have the advantages of reduced chordal effects, chain speed variation, chain articulation angle and per sprocket efficiency. Sprockets with fewer teeth have the advantages of smaller size which can aid in solving packaging constraints, longer center distances 609 and greater lower chain distance to BB center 605 for the same tension side radial chainline tangent to BB center 607, and more clearance around the sprockets 205 and 300 for structural components such as chainstay yokes as well as increased ground clearance for the primary drive sprocket 200.

Lower chain distance to BB center 605 is measured as the perpendicular distance from the bottom of the links 426 and or 428 of the slack side 452 of the secondary drive chain 310 to the bottom bracket spindle axis 544. Greater lower chain distance to BB center 605 allows for greater clearances between the secondary drive chain 310 and drive side crank arm 562.

Tension side radial chainline tangent to BB center 607 is measured as the vertical distance from the bottom bracket spindle axis 544 to a horizontal line that is tangent to the pitch circle diameter 600 of the secondary drive sprocket 300 when viewed in a 2D side view with the cycle on flat level ground. In certain preferred embodiments of the invention, tension side radial chainline tangent to BB center 607 is less than 200mm. In certain other preferred embodiments of the invention, tension side radial chainline tangent to BB center 607 is less than 170mm. In certain other preferred embodiments of the invention, tension side radial chainline tangent to BB center 607 is less than 160mm. In certain other preferred embodiments of the invention, tension side radial chainline tangent to BB center 607 is less than 150mm. In certain other preferred embodiments of the invention, tension side radial chainline tangent to BB center 607 is less than 140mm. In certain other preferred embodiments of the invention, tension side radial chainline tangent to BB center 607 is less than 100mm. In certain other preferred embodiments of the invention, tension side radial chainline tangent to BB center 607 is less than 80mm. The performance advantages of designing for a tactical anti-squat response and the desire to maintain minimal horizontal chainstay length 1 variation during mid to late travel cornering drive the relationships between tension side radial chainline tangent to BB center 607, wheel carrier 35 fixed pivot 96 location, and axle path 38 inflection point 39. Concurrently, the tension side radial chainline tangent to BB center 607, wheel carrier 35 fixed pivot 96 location, are located to achieve a tactical anti-squat response and axle path 38 inflection point 39 which relates to cornering performance.

Center distance 609 is the aligned distance between the primary drive sprocket rotation axis 215 of the primary drive sprocket 200 and primary driven sprocket rotation axis 220 of the primary driven sprocket 205 and is a component of the sprocket 200, 205 pitch circle diameters 600 and the number of links 426, 428 in the primary drive chain 210. In general, a chain with more links 426, 428 will make for a greater center distance 609. It is therefore important to carefully balance center distance 609 with other parameters such as sprocket diameters 200, 205, the number of chain links 426, 428 including even number and odd numbers of links, general clearances between drivetrain and structural components, and the effect of tension side radial chainline tangent to BB center 607 on anti-squat levels and therefore the location of the driving force line 99 (FIG. 9 and 10), wheel carrier 35 fixed pivot 96 and ultimately influencing the location of axle path 38 inflection point 39.

Clearance distance 613 (FIG. 19) is measured as the minimum distance between the tips of the teeth of the primary drive sprocket 200 and primary driven sprocket 205. In certain preferred embodiments of the invention, the clearance distance 613 is greater than 1mm. In certain other embodiments of the invention, the clearance distance 613 is greater than 2mm, 3mm, 4mm, 5mm, 6mm, 7mm, 8mm, 9mm, 10mm, 12mm, 15mm, and 20mm.

When coupling single pivot rear suspensions with the sequential adjacent drive, is it possible to make more compact wheel carriers than a cycle using a conventional drivetrain. This is made possible by the fact that the sequential adjacent drive tension side radial chainline tangent to BB center 607 is elevated when compared to the conventional drivetrain. General frame tube and shock absorber locations cannot vary greatly between sequential adjacent drive cycles and conventional drivetrain cycles because shock absorber locations and top tube locations are largely constrained by rider fitment and standover clearance requirements. This elevated chainline coupled with existing rider fitment and therefore packaging requirements, allows the use of a more compact wheel carrier 35. This more compact wheel carrier 35 has the advantage of having less inherent stiffness, and therefore can be designed with a more tactical level of flexural compliance, adding to traction in various riding conditions over rough terrain.

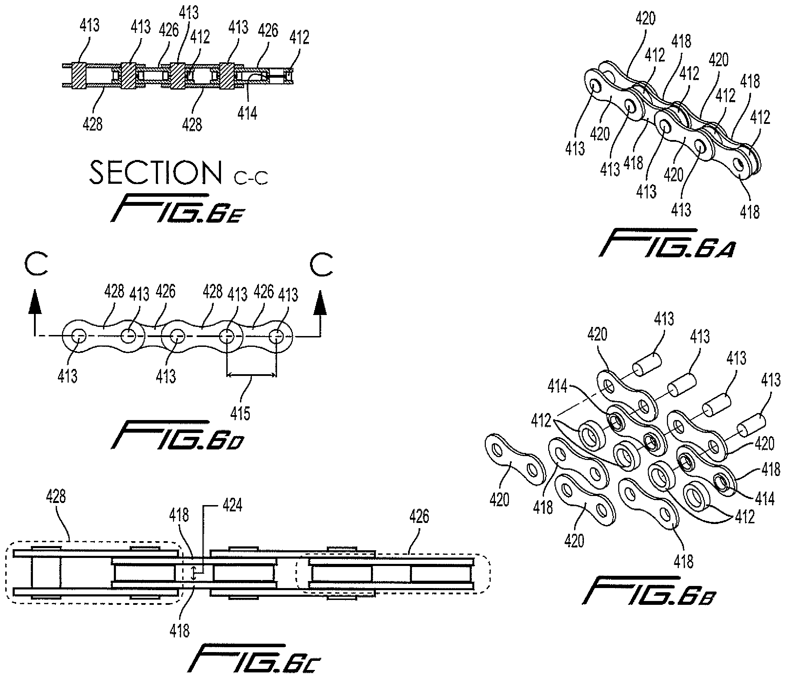

Alternating tooth design type sprockets such as narrow-wide, or alternating tooth and other marketing names are useful for mountain bike drivetrains. In an alternating tooth sprocket, the sprocket has an even number of teeth, with each tooth corresponding to fitting between either the two inner plates 418 of a drive chain or the two outer plates 420 of a drive chain (FIG. 6A). The intent of the alternating tooth design type sprocket is to provide better chain retention than a sprocket with all teeth of the same width. Using an alternating tooth type sprocket on the secondary drive sprocket 300 can be advantageous because the secondary drive chain 310 is subject to irregular movement and imperfect engagement with the secondary drive sprocket 300 as a cycle traverses rough terrain. In certain embodiments, the secondary drive sprocket 300 has more teeth than the primary drive sprocket 200.

In certain other embodiments, the primary drive sprocket 200 has an equal number of teeth to the secondary drive sprocket 300. In certain embodiments, the secondary drive sprocket 300 has an even number of teeth and more teeth than the primary drive sprocket 200. In other embodiments, the secondary drive sprocket 300 has an even number of teeth and more teeth than the primary drive sprocket 200, where the primary drive sprocket 200 has an odd number of teeth. In other embodiments, the secondary drive sprocket 300 has an even number of teeth and more teeth than the primary drive sprocket 200, the primary drive sprocket 200 has an even number of teeth, and the primary driven sprocket 205 has an odd number of teeth. In other embodiments, the secondary drive sprocket 300 has an even number of teeth and more teeth than the primary drive sprocket 200, the primary drive sprocket 200 has an odd number of teeth, and the primary driven sprocket 205 has an even number of teeth.

It has been observed that a sprocket with an odd number of teeth will offer at least double the service life of a sprocket with even teeth when engaged with a chain using an even number of links. The reason for this is that, if a sprocket has an even number of teeth, the same tooth will be engaged by the same rollers of the chain on each rotation. This repetitive contact between the same rollers and teeth leads to uneven wear on the chain and sprocket and a shortened service life for both components. In the primary drive it is therefore of benefit where possible to use sprockets that have an odd number of teeth, and engaging with a chain using an even number of links.

In certain embodiments, the secondary drive sprocket 300 is operably connected to a drive hub 572 such that teeth of the secondary drive sprocket 300 are outboard (relative to a tire axis of symmetry) of the primary drive chain 210. In this arrangement, the secondary drive sprocket 300 can be easily changed out for a secondary drive sprocket 300 with different features such as number of teeth, tooth shape, tooth type, material, weight, design, aesthetics, chain pitch, beltchain type, and other varying characteristics, without removing the primary drive chain 210.

The secondary driven sprocket 305 may comprise single speed or multi-speed gearing, meaning that the rear wheel 20 can be connected to one secondary driven sprocket 305 in a single speed cycle or to a cluster of multiple sprockets commonly called a cassette 315 in a multi-speed cycle. The secondary driven sprocket 305 (or cassette 315) is operably connected to the rear wheel such 20 that the secondary driven sprocket 305 and the rear wheel 20 co-rotate and torque can be transmitted from the secondary driven sprocket 305 to the rear wheel 20 and vice versa. In certain embodiments, the secondary driven sprocket 305 comprises a cassette 315 having more than 13 speeds. In certain embodiments, the secondary driven sprocket 305 comprises a cassette 315 having more than 12 speeds. In certain embodiments, the secondary driven sprocket 305 comprises a cassette 315 having more than 11 speeds. In certain embodiments, the secondary driven sprocket 305 comprises a cassette 315 having more than 10 speeds. In certain embodiments, the secondary driven sprocket 305 comprises a cassette 315 having more than 9 speeds.

In direct drive and idler drive cycles, such as those shown in FIGS. 3-4B, 8A-10, and 17-20, and more so with e-bikes, changing chainrings is a valuable but difficult process. In direct drive cycles, the chainring is operably connected to the crankarms using various methods including chainring bolts, splines, lockrings, and bolts. In mid-drive e-bikes, the size of the mid-drive 530 motor in the X-Y direction is so large that access to chainring bolts is limited and difficult. In some mid-drive equipped cycles, removal of the entire mid-drive assembly is required to gain access to the bolts for chainring removal. Other direct drive cycles using mid-drives use chainring bolts to secure a chainring to a spider and allow access to only one chairing bolt at a time. This arrangement is difficult to work on as it requires the mechanic to simultaneously align 3 or more holes while only being able to access one bolt hole from both sides, forcing chainring changes to be complicated, time consuming and frustrating. Other cycles require the removal of the crank arms 562 to access the removal of the chainring. In any of these described existing layouts, the removal of the chainring is a complicated, time consuming, greasy, and unpleasant process. The disclosed assemblies solve this problem by employing the primary drive assembly and the secondary drive assembly, where the secondary drive sprocket 300 is non-co-located to the crank spindle 542. The primary driven sprocket 205 is operably connected to and transmits torque to the secondary drive sprocket 300 and *vice versa.* In certain embodiments, a drive hub 572 interfaces with bearings 555 which allow rotation of the drive hub 572 around the primary driven sprocket rotation axis 220 which is co-located with the secondary drive sprocket rotation axis 325. In certain embodiments, the secondary drive sprocket 300 and the primary driven sprocket 205 are operably connected to the drive hub 572. The secondary drive sprocket 300 can be connected to the drive hub 572 using one or more connections including but not limited to a spline 550, a sprocket bolt 552, pins, clips, retaining rings, or other fastening or torque transfer means. In this arrangement, the primary driven sprocket 205 or the secondary drive sprocket 300 can be easily changed out for sprockets with different features such as number of teeth, tooth shape, tooth type, material, weight, design, aesthetics, chain pitch, beltchain type, and other varying characteristics.

In certain other embodiments, the drive hub 572 and the primary driven sprocket 205 comprise unitized construction and may include a means for operably connecting the secondary drive sprocket 300 to the combined drive hub 572 and primary driven sprocket 205 such that the sprockets co-rotate and torque is transmitted from one sprocket to another.

In certain other embodiments, the drive hub 572 and the secondary drive sprocket 300 comprise unitized construction and may include a means for operably connecting the primary driven sprocket 205 to the combined drive hub 572 and secondary drive sprocket 300 such that the sprockets co-rotate and torque is transmitted from one sprocket to another.

In certain other embodiments, a drive hub 572 may be constructed or assembled from multiple subcomponents and may include a means for operably connecting the primary driven sprocket 205 and secondary drive sprocket 300 such that the sprockets co-rotate and torque is transmitted from one sprocket to another. In the embodiments where the drive hub 572 is constructed or assembled from subcomponents, these subcomponents may be mirror images of each other, identical parts assembled together, or bespoke parts.

In certain embodiments, a one or more spacers may be positioned between the secondary drive sprocket 300 and the primary driven sprocket 205 to adjust an axial distance between the primary drive sprocket 200 and the secondary drive sprocket 300.

In certain other embodiments, one or more spacers may be positioned between the primary driven sprocket 205 and the drive hub 572 to adjust an axial distance between the primary drive sprocket 200 and the secondary drive sprocket 300.

In certain other embodiments, one or more spacers may be positioned between the secondary drive sprocket 300 and the drive hub 572 to adjust an axial distance between the primary drive sprocket 200 and the secondary drive sprocket 300.

In certain other embodiments, one or more spacers can be positioned between the subcomponents of the drive hub 572 to adjust an axial distance between the primary drive sprocket 200 and the secondary drive sprocket 300.

In certain other embodiments, the drive hub may include an assembly having at least two subcomponents and mating threads such that the two subcomponents can thread together or apart to adjust an axial distance between the primary drive sprocket 200 and the secondary drive sprocket 300.

In certain other embodiments, the drive hub 572 may include an assembly having at least three subcomponents each subcomponent having or more left hand/or right-hand threads such that a width adjuster with both left and right hand threads can mate with other subcomponents wherein turning the width adjuster will operably vary an axial distance between the primary drive sprocket 200 and the secondary drive sprocket 300.

Torque can be transmitted between said sprockets by a variety of means including but not limited to the singular or plural of any component or combination of components including a drive hub, an intermediate drive hub, a spline, a splined connection, a bolt, a bolted connection, a pin, a pinned connection, a weld, a welded connection, a rivet, a riveted connection, a thread, a threaded connection, and a unitized construction where the primary driven sprocket 205 and the secondary drive sprocket 300 are a single integrated component. A threaded connection as described herein includes a sprocket with a female thread that is co-located to the sprocket's rotation axis and which engages with another sprocket or another component such as a drive hub so that torque can be transmitted between sprockets in the style of a common bicycle thread on freewheel or fixed-gear sprocket. A bolted connection as described herein includes but is not limited to a sprocket using one or more bolts that are either co-located or non-co-located to the sprocket's rotation axis and either serve as a mechanical connection to another sprocket or drive hub. In a bolted connection, the bolts can both or either transmit torque and/or axially secure a sprocket to another component. For simplicity of manufacture, types of bolted connections used in bicycles today may in some embodiments be used to assemble components including sprockets and drive hubs. Such known connections include 6-bolt ISO brake rotor mounting, spline or centerlock mounting which uses a combination of a central bolt that is co-located to a rotation axis and a fine pitch spline, and direct mount chainring mounting which uses a combination of bolts that are non-co-located to a sprocket rotation axis and a course spline. For simplicity of manufacture, threaded connections can include but are not limited to standard sizes used in the bicycle industry including Italian: imperial - 1.378" × 24 tpi metric - 35 × 1.058 mm; ISO: imperial - 1.375" × 24 tpi metric - 34.92 × 1.058 mm; British: imperial - 1.370" × 24 tpi metric - 34.80 × 1.058 mm; French: imperial - 1.366" × 25.4 tpi metric - 34.7 × 1 mm; Metric BMX: imperial - 1.181" × 25.4 tpi metric - 30 × 1 mm.

In certain embodiments, a locational relationship in the X/Y directions between the wheel carrier fixed pivot 96 and the secondary drive sprocket rotation axis 325 can be non-co-located in nature and may be manipulated in relation to one another so that a single wheel carrier component can be configured to provide a similar or identical anti-squat response for both e-bikes and analog bikes.

Furthermore, a swingarm length for a single pivot wheel carrier suspension for a given rear suspension travel may be longer than on a direct drive cycle due to the reduction in packaging constraints associated with an elevated wheel carrier fixed pivot. In certain other embodiments, a swingarm length for a single pivot wheel carrier suspension can be longer than the chainstay length. In certain other embodiments, a swingarm length for a single pivot wheel carrier suspension can be equal to a chainstay length. In certain other embodiments, a swingarm length for a single pivot wheel carrier suspension can be shorter than a chainstay length. In certain other embodiments, a swingarm length for a single pivot wheel carrier suspension can be shorter than a chainstay length by a percentage of chainstay length chosen from the range consisting of 0.0001% to 90%. In certain other embodiments, a swingarm length for a single pivot wheel carrier suspension can be longer than a chainstay length by a percentage of chainstay length chosen from the range consisting of 0.0001% to 300%.

With reference to the following description specific locations of components are intended to be measured when viewed in a 2D side view and when the vehicle is resting on flat, level ground, and, where applicable, with the vehicle's suspension in a fully extended state.

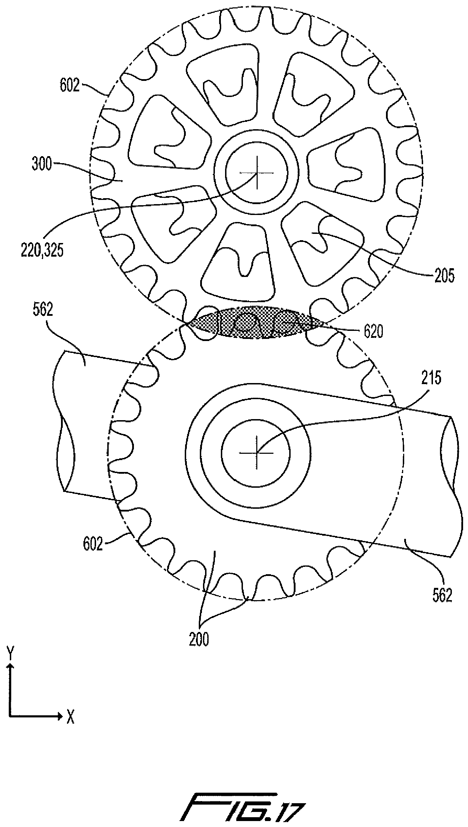

In certain embodiments, the primary drive sprocket 200 and the secondary drive sprocket 300 may be positioned adjacent to one another in an axial direction such that the maximum circle diameters 602 (FIGS. 17-19) of the primary drive sprocket 200 and of the secondary drive sprocket 300 overlap when viewed in a 2D side view.

In certain embodiments, the primary drive sprocket 200 and the secondary drive sprocket 300 may be positioned adjacent to one another in an axial direction such that teeth of the primary drive sprocket 200 overlap with teeth of the secondary drive sprocket while the sprockets are rotating and when viewed in a 2D side view.

In certain embodiments, a primary drive sprocket and a secondary drive sprocket can be positioned adjacent to each other in an axial direction such that the bottom circle diameters of the sprockets overlap when viewed in a 2D side view.

In certain embodiments, the primary drive sprocket 200 and the secondary drive sprocket 300 may be positioned adjacent to each other in an axial direction such that the maximum perimeters 612 of the primary drive chain 210 and the secondary drive chain 310 overlap when viewed in a 2D side view with the cycle on flat level ground.

In certain embodiments, the primary drive sprocket 200 and the secondary drive sprocket 300 may be positioned adjacent to each other in an axial direction such that the maximum perimeters 612 of a primary drive belt and a secondary drive chain 310 overlap when viewed in a 2D side view with the cycle on flat level ground.

In certain embodiments, the primary drive sprocket 200 and the secondary drive sprocket 300 may be positioned adjacent to each other in an axial direction such that the maximum perimeters of the primary drive chain 210 and a secondary drive belt overlap when viewed in a 2D side view with the cycle on flat level ground.

In certain embodiments, the primary drive sprocket 200 and the secondary drive sprocket 300 may be positioned adjacent to each other in an axial direction such that the maximum perimeters 612 of a primary drive belt and a secondary drive belt overlap when viewed in a 2D side view with the cycle on flat level ground.

In certain embodiments, the primary drive sprocket 200 and the secondary drive sprocket 300 may be positioned adjacent to each other in an axial direction such that the maximum perimeters 612 of a primary drive beltchain and a secondary drive beltchain overlap when viewed in a 2D side view with the cycle on flat level ground.

In certain embodiments, the primary drive sprocket 200 and the secondary drive sprocket 300 may be positioned such that the secondary drive sprocket rotation axis 325 is positioned above, vertical, behind, forward of, in front of, upwards of, forwards of, or rearwards of the primary drive sprocket rotation axis 215 when viewed in a 2D side view with the cycle on flat level ground.

In certain embodiments, the primary drive sprocket 200 and the secondary drive sprocket 300 may be positioned such that a secondary drive sprocket rotation axis 325 is above and forwards of the primary drive sprocket rotation axis 215 when viewed in a 2D side view with the cycle on flat level ground. In certain other embodiments, the primary drive sprocket 200 and the secondary drive sprocket 300 may be positioned such that the secondary drive sprocket rotation axis 325 is above and vertical of the primary drive sprocket rotation axis 215 when viewed in a 2D side view with the cycle on flat level ground. In certain other embodiments, the primary drive sprocket 200 and the secondary drive sprocket 300 may be positioned such that a secondary drive sprocket rotation axis 325 is above and behind the primary drive sprocket rotation axis 215 when viewed in a 2D side view with the cycle on flat level ground.

In certain embodiments, the primary drive sprocket 200 and the secondary drive 300 sprocket may be positioned such that the secondary drive sprocket rotation axis 325 is above the primary drive sprocket rotation axis 215 when viewed in a 2D side view with the cycle on flat level ground.

In certain embodiments, the primary drive sprocket 200 and the secondary drive 300 sprocket may be positioned such that the secondary drive sprocket rotation axis 325 is vertically above the primary drive sprocket rotation axis 215 when viewed in a 2D side view with the cycle on flat level ground. In certain other embodiments, the primary drive sprocket 200 and the secondary drive sprocket 300 may be positioned such that the secondary drive sprocket rotation axis 325 is in front of the primary drive sprocket rotation axis 215 when viewed in a 2D side view with the cycle on flat level ground. In certain other embodiments, the primary drive sprocket 200 and the secondary drive sprocket 300 may be positioned such that the secondary drive sprocket rotation axis 325 is behind the primary drive sprocket rotation axis 215 when viewed in a 2D side view with the cycle on flat level ground.

The primary drive assembly and the secondary drive assembly each have a lateral chainline. Lateral chainline of the primary drive assembly is a measurement from the tire plane of symmetry 19 to a plane that is symmetric to the primary drive chain outer links where the primary drive chain is engaged with the primary drive sprocket. Lateral chainline of the secondary drive assembly is a measurement from the tire plane of symmetry 19 to a plane that is symmetric to the secondary drive chain outer links where the secondary drive chain is engaged with the secondary drive sprocket. In certain embodiments, the lateral chainline of the primary drive assembly and/or the secondary drive assembly is a measurement selected from the range of 18-80mm. In certain embodiments, the lateral chainline of the primary drive assembly is greater than 18mm, or 20mm, or 25mm, or 30mm, or 35mm, or 40mm, or 45mm, or 50mm, or 55mm, or 60mm, or 65mm, or 70mm, or 75mm, or 80mm, or 85mm. In certain preferred embodiments, the lateral chainline of the primary drive assembly is a measurement selected from the range of 25-60mm. In certain other embodiments, the lateral chainline of the primary drive assembly is a measurement selected from the range of 39-58mm. In certain other embodiments, the lateral chainline of the primary drive assembly is a measurement selected from the range of 41-57.5mm.

In certain preferred embodiments, the lateral chainline of the primary drive assembly is a measurement selected from the range of 25-65mm. In certain other embodiments, the lateral chainline of the primary drive assembly is a measurement selected from the range of 39-63mm. In certain other embodiments, the lateral chainline of the primary drive assembly is a measurement selected from the range of 41-62.5mm.

In certain embodiments, the lateral chainline of the secondary drive assembly is a measurement selected from the range of 18-80mm. In certain embodiments, the lateral chainline of the secondary drive assembly is greater than 18mm, or 20mm, or 25mm, or 30mm, or 35mm, or 40mm, or 45mm, or 50mm, or 55mm, or 60mm, or 65mm, or 70mm, or 75mm, or 80mm, or 85mm. In certain preferred embodiments, the lateral chainline of the secondary drive assembly is a measurement selected from the range of 30-70mm. In certain other embodiments, the lateral chainline of the secondary drive assembly is a measurement selected from the range of 46-65mm. In certain other embodiments, the lateral chainline of the secondary drive assembly is a measurement selected from the range of 47.5-62mm. In certain other embodiments, the lateral chainline of the secondary drive assembly is a measurement selected from the range of 54-58mm.

In certain embodiments, the lateral chainline of the secondary drive assembly is a measurement selected from the range of 30-75mm. In certain other embodiments, the lateral chainline of the secondary drive assembly is a measurement selected from the range of 51-70mm. In certain other embodiments, the lateral chainline of the secondary drive assembly is a measurement selected from the range of 52.5-67mm. In certain other embodiments, the lateral chainline of the secondary drive assembly is a measurement selected from the range of 59-63mm.

The distance between the lateral chainline of the primary drive assembly and the lateral chainline of the secondary drive assembly can be measured. In certain preferred embodiments, the distance between the lateral chainline of the primary drive assembly and the lateral chainline of the secondary drive assembly is a measurement selected from the range of 5-50mm, or of 6-40mm, or 7-30mm, or 7-27mm, or 7-20mm. In certain other embodiments, the distance between the lateral chainline of the primary drive assembly and the lateral chainline of the secondary drive assembly is a measurement selected from the range of 7 -15mm. In certain other embodiments, the distance between the lateral chainline of the primary drive assembly and the lateral chainline of the secondary drive assembly is a measurement selected from the range of 7-13.5mm. In certain other embodiments, the distance between the lateral chainline of the primary drive assembly and the lateral chainline of the secondary drive assembly is a measurement selected from the range of 7-12mm. In certain other embodiments, the distance between the lateral chainline of the primary drive assembly and the lateral chainline of the secondary drive assembly is a measurement selected from the range of 7-10mm.

Variable aligned chainstay lengths 2 are sometimes desirable to provide a slightly longer aligned chainstay length 2 for a larger size cycle frame 25 and a slightly shorter aligned chainstay length 2 for a smaller cycle frame 25. On Cycles using direct drive drivetrains, aligned chainstay lengths 2 are most often constant across all size cycles, at times because packaging constraints drive a longer than desired chainstay and/or due to cost and design related issues. In certain embodiments, variable aligned chainstay lengths 2 are possible to meet the anthropomorphic variations of various sized riders while using fewer actual cycle subcomponents. The location of the secondary drive sprocket, which 300 ultimately drives the rear cassette 315 is not constrained around the bottom bracket center, therefore the secondary drive sprocket rotation axis 325 can be moved in the X and Y directions so that a single wheel carrier component can be configured to allow for multiple aligned chainstay length 2 options. Variations in aligned chainstay length 2 of +/- 10mm are easily achievable and in a way that conventional direct drive drivetrains cannot achieve.

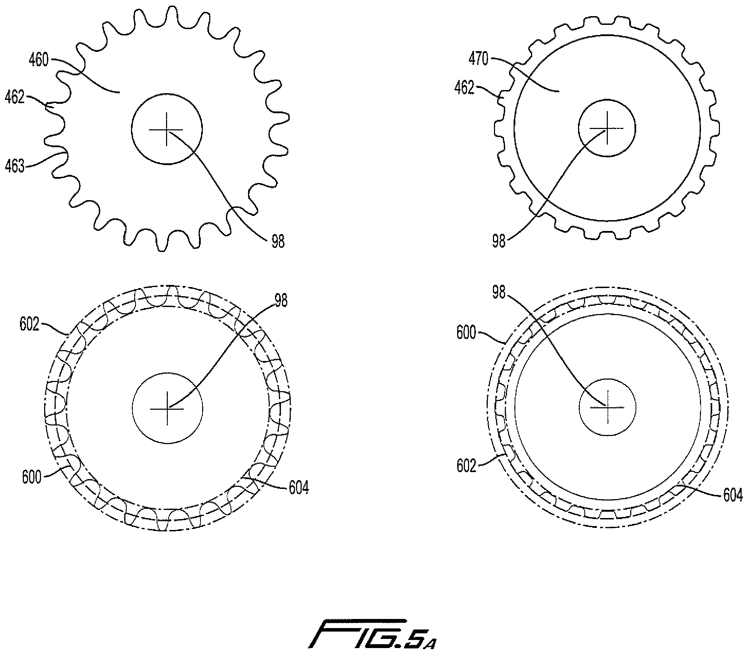

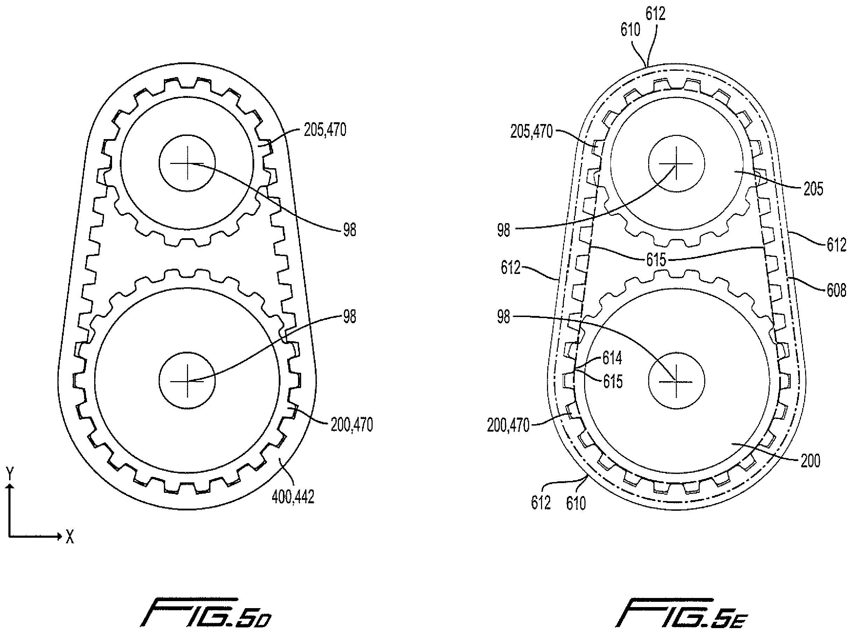

Some chain drive measurements include sprocket pitch circle diameter 600 and maximum circle diameter 602 (FIG. 5A- 5C). For circular chain sprockets 460, the pitch circle diameter 600 of a chain sprocket 460 is defined in a 2D side view by tracing a circle with the circle's center point at the rotation axis 98 of the chain sprocket 460 and the diameter intersecting the center axis of the chain pins 413 when a chain is engaged with the sprocket teeth 462. For non-circular chain sprockets, the pitch circle diameter 600 of a chain sprocket 460 is defined in a 2D side view by tracing a circle with the circle's center point at the rotation axis 98 of the chain sprocket and the diameter intersecting the centers of the chain pins 413 when a chain is engaged or with the tooth 462 or teeth 462 that are furthest from the rotation axis 98 of the sprocket 460. A chain is properly engaged with a sprocket when the rollers 412 are in contact with the seating curve 463 of the sprocket 460. The chain has a pitch where the chain pitch 415 is the center distance between the centers of two adjacent chain pins 413. Bicycle chains commonly used today feature a 12.7mm (1/2in.) pitch with shorter and longer pitches both possible to use in cycles and currently in use in other types of cycles including motorized cycles and other applications.

The maximum circle diameter 602 of a chain sprocket 460 is defined in a 2D side view by tracing a circle with the circle's center point at the rotation axis 98 of the chain sprocket 460 and the diameter intersecting the outermost point on any tooth 462 on the chain sprocket 460.

The bottom circle diameter 604 of a chain sprocket 460 is defined in a 2D side view by tracing a circle with the circle's center point at the rotation axis 98 of the chain sprocket 460 and the diameter of the circle tangent to the curve at the bottom of the tooth 462 gap. The curve at the bottom of the tooth gap is also known as the seating curve 463. The bottom diameter is equal to the pitch circle diameter 600 minus the diameter of the chain roller 412.

The maximum engaged perimeter 610 of a chain 402 and sprocket 460 is defined in a 2D side view by tracing a circle with the circle's center point at the rotation axis 98 of the chain sprocket 460 and the diameter intersecting the outermost point of the chain 402 when the chain 402 is properly engaged with the sprocket 460.

The minimum engaged perimeter 614 of a chain 402 and sprocket 460 is defined in a 2D side view by tracing a circle with the circle's center point at the rotation axis 98 of the chain sprocket 460 and the diameter intersecting the innermost point of the chain 402 when the chain 402 is properly engaged with the sprocket 460.

Shown in FIGS 5A-5e, the pitch circle diameter 600 of a synchronous belt 442 pulley is defined by and tangent to the belt pitch line 608 which is typically outboard of the maximum diameter of the actual synchronous belt pulley 470 alone. The belt pitch line 608 is defined by the manufacturer of a chosen synchronous belt to its own specifications and easily referenced in technical materials from said manufacturer.

Shown in FIGS 5a-5c, the maximum circle diameter 602 of a synchronous belt is defined in a 2D side view by tracing a circle with the circle's center point at the rotation axis 98 of the synchronous belt pulley 470 and the diameter intersecting the outermost point of any tooth 462 of the synchronous belt pulley 470.

Chains used on bicycles are typically of the roller chain type. Although there are industrial standards governing the design and nomenclature of industrial chains, bicycle chains can have some differences from those in ANSI/ASME B29.1M. A roller chain includes several parts including but not limited to plates 418, 420, pins 413, rollers 412, and bushings 414. Some chains are assembled such that the bushing is integrated into the plates, and some chains are assembled with bushings that are separate from the plates. The chain is assembled such that the typically round pins are pressed into the plates and in some embodiments transmit force from the rollers to the plates. In some embodiments selections of bushings and/or pins intermediately located between the rollers and plates. In some embodiments, the rollers transmit force directly to the plates. In a typical chain, inner plates 418 and outer plates 420 are used to create multi-roller chains from single segments. An inner link 426 can comprise inner plates 418, and an outer link 428 can comprise outer plates 420. In some embodiments, a type of plate called an offset plate can be used to create what is known as a half-link. In certain embodiments, a roller chain can be made up entirely of inner and outer plates. In other embodiments, a roller chain can be made up entirely of offset plate half links. In other embodiments, a roller chain can be made up of a combination of inner and outer plates and offset plates. In some roller chains, a quick disconnect link sometimes called a Powerlink can be used to connect the free ends of a chain segment to make a continuous chain. In practice, roller chains made from flat plates and excluding offset plates can have a higher strength to weight ratio and/or higher breaking strength than a roller chain using offset plates. Roller chains using offset plates can allow for more flexibility in terms of overall chain length, with the potential detriment of having a breaking strength of 20% less for the same weight, or one or more offset links using a thicker plate to make up for the geometric strength deficiency of the offset plate.

Bicycle chains are predominantly of the ½ inch chain pitch 415 size and can vary in width based on the application. Bicycles can be single speed or multi-speed meaning that the rear wheel can be connected to one sprocket in a single speed or a cluster of multiple sprockets commonly called a cassette in a multi-speed.

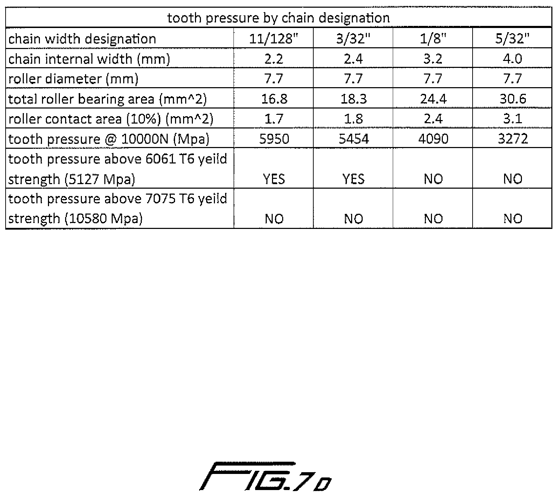

There are 4 sizes of the internal width 424 (FIGS. 6A-6E and 7D) of bike chain, all measured in inches: 1/8", 3/32", 11/128", and 5/32". 1/8" chains are popular with BMX and other single sprocket type cycles and are an economical choice for a high strength chain. 3/32" chains are popular with some cycles using a single rear sprocket and cycles with 5-8 speed shiftable rear cassettes. 3/32" chains are an economical choice for a high strength chain and are used on most low-cost shiftable bicycles. 11/128" chains are popular with cycles using 9-13 speed shiftable rear cassettes. 11/128" chains are typically high strength chains that are significantly more expensive than 1/8" and 3/32" chains and are used on most higher cost shiftable bicycles including mountain bikes and e-bikes 5/32" chains are considered and exotic standard and are largely used on heavy duty cargo bikes and tricycles.

Compared to the chains for multi-speed bikes, the chains for single speed bikes can use wider spacing between chain links and correspondingly wider teeth on sprockets to give greater contact area between the sprocket teeth and chain rollers. Many single speed cycles use a 1/8" or 3/32" internal width chain. As illustrated in FIG. 7D, this greater contact area between the sprocket teeth and chain rollers decreases the structural pressure at the contact points between the components as the system operates, which in turn can allow for the use of materials that have lower compressive and tensile strengths for the manufacture of both the chain and sprocket. Manufacturing the sprockets from common materials like 6061 T6 aluminum and low carbon steel can have cost efficiencies, as lower strength materials are typically more cost effective than higher strength materials and can be fabricated using more cost-effective techniques as well.

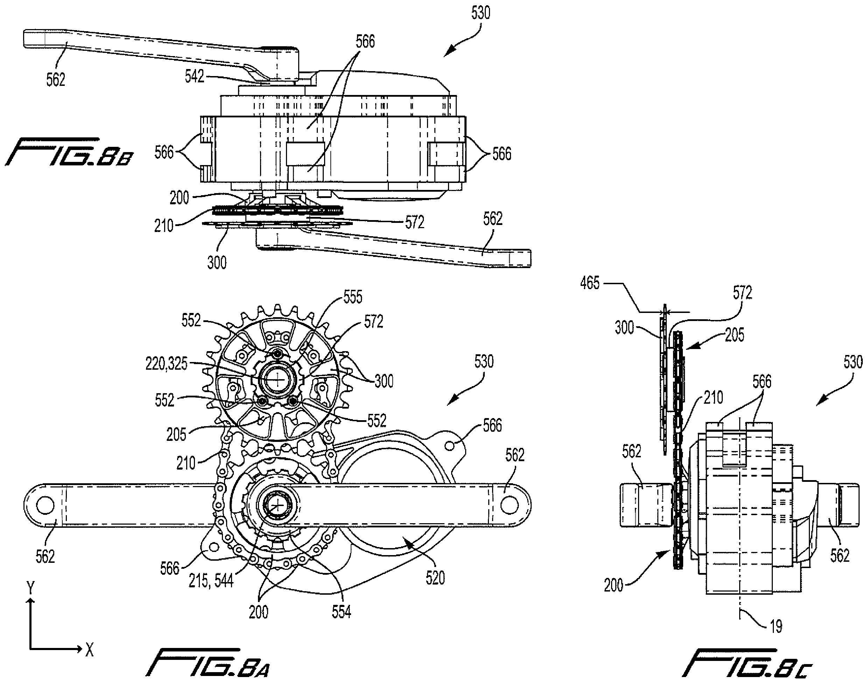

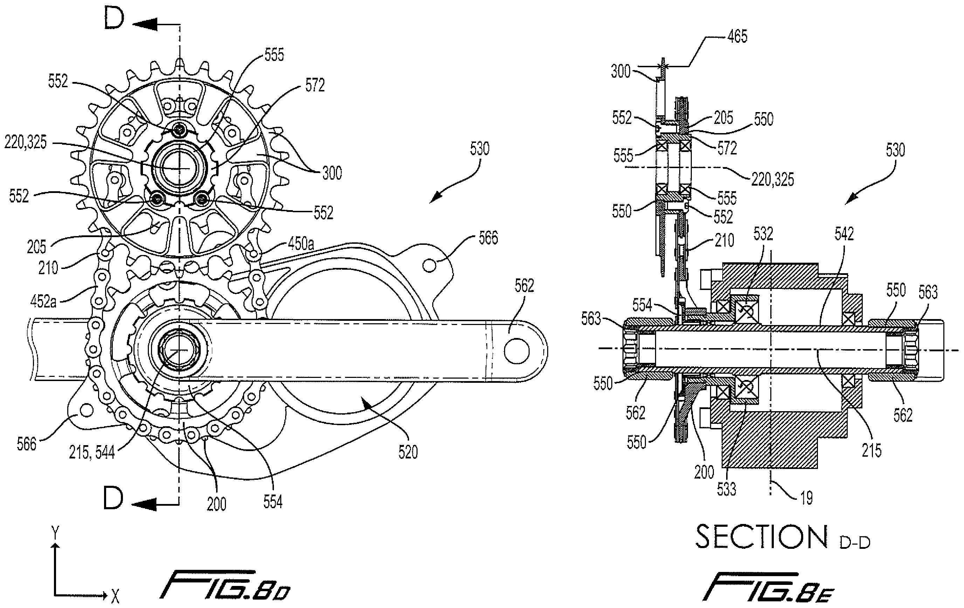

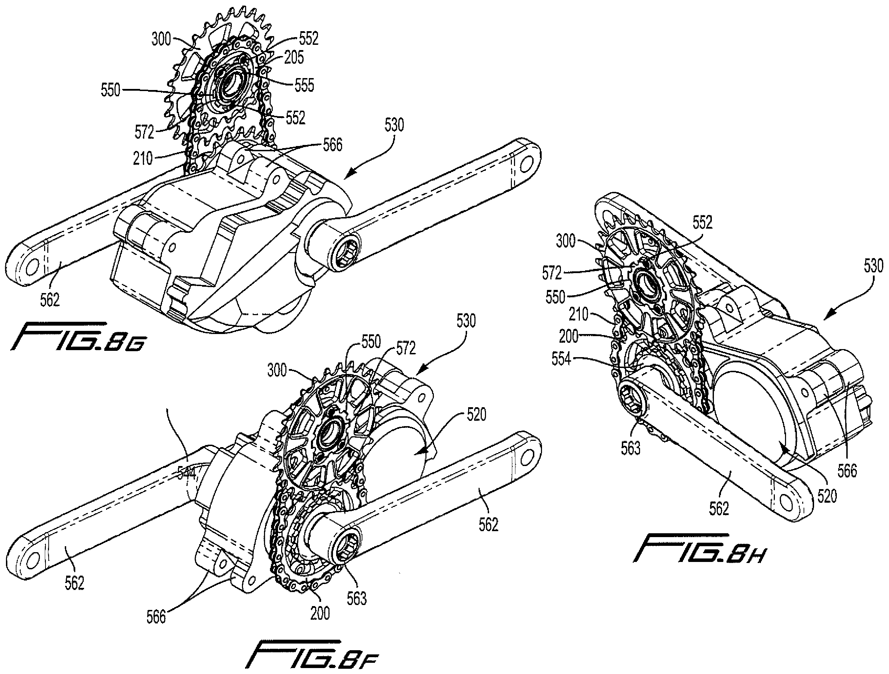

Chains for multi speed bikes must use narrow spacing between chain links and correspondingly narrow teeth on sprockets to meet the packaging and chain to sprocket drive angle requirements of rear cassette equipped bikes. Most shiftable cassette multi-speed cycles use a 3/32" or 11/128" internal width chain. For high-end e-bikes and mountain bikes today using rear cassettes with at least 9 speeds and typically 11-12 speeds, the 11/128" internal width is the gold standard and predominant choice. The narrow spacing of the multi-speed chains and sprockets forces minimal contact area between the sprocket teeth and chain rollers. This minimal contact area between the sprocket teeth and chain rollers increases the structural pressure at the contact points between the components as the system operates (see FIG. 7D), which in turn requires the use of materials that have high compressive and tensile strengths for the manufacture of both the chain and sprocket. Manufacturing the sprockets from material with high compressive and tensile strengths such as 7075 T6 aluminum can have cost detriments, as higher strength materials are typically more costly than lower strength materials and require more costly manufacturing techniques as well. Sprockets 200, 205, 300, 305, 315 having teeth 462 can have a tooth width 465. Sprocket tooth width 465 (FIG. 8C,8E) can be measured at any tooth 26 that meshes with the internal width 424 (FIG. 6) of the chain.

Sprocket sizes in this disclosure are referred to by the number of teeth for ease of discussion. All of the roller chain sprockets referred to by the number of teeth 462 of the sprocket in this disclosure are discussed using the bicycle industry standard of (1/2 inch) 12.7mm chain pitch 415, and it should be understood that varying chain pitch 415 (FIGS. 6D,7A) can vary the number of teeth 462 for a sprocket 460,470 (FIG 5A) of the same pitch circle diameter 600. Conversely, varying the pitch circle diameter 600 for a given number of teeth 462 will vary the chain pitch 415. It may be advantageous in certain embodiments to use chains with shorter or longer pitches 415 to achieve variations in chain drive transmissions using derailleurs. Sprocket pitch circle diameter 600 can be calculated as a function of chain pitch 415 and the number of teeth 462 in a sprocket 460,470 by using the formula: Pitch diameter = chain pitch / sin (180 / number of teeth in a sprocket).

Sprocket pitch circle diameters 600 for chains having a 12.7mm (1/2 inch) chain pitch are discussed. A sprocket with 'N' number of teeth will have a given pitch diameter inmm of: 9 teeth = 37.1mm, 10 teeth = 41.1mm, 11 teeth = 45.1mm, 12 teeth = 49.1mm, 13 teeth = 53.1mm, 14 teeth = 57.1mm, 15 teeth = 61.1mm, 16 teeth = 65.1mm, 17 teeth = 69.1mm, 18 teeth = 73.1mm, 19 teeth = 77.2mm, 20 teeth = 81.2mm, 21 teeth = 85.2mm, 22 teeth = 89.2mm, 23 teeth = 93.3mm, 24 teeth = 97.3mm, 25 teeth = 101.3mm, 26 teeth = 105.4mm, 27 teeth = 109.4mm, 28 teeth = 113.4mm, 29 teeth = 117.5mm, 30 teeth = 121.5mm, 31 teeth = 125.5mm, 32 teeth = 129.6mm, 33 teeth = 133.6mm, 34 teeth = 137.6mm, 35 teeth = 141.7mm, 36 teeth = 145.7mm, 37 teeth = 149.8mm, 38 teeth = 153.8mm, 39 teeth = 157.8mm, 40 teeth = 161.9mm, 41 teeth = 165.9mm, 42 teeth = 169.9mm, 43 teeth = 174.0mm, 44 teeth = 178.0mm, 45 teeth = 182.1mm, 46 teeth = 186.1mm, 47 teeth = 190.1mm, 48 teeth = 194.2mm, 49 teeth = 198.2mm, 50 teeth = 202.3mm, 51 teeth = 206.3mm, 52 teeth = 210.3mm, 53 teeth = 214.4mm, 54 teeth = 218.4mm, 55 teeth = 222.5mm, 56 teeth = 226.5mm, 57 teeth = 230.5mm, 58 teeth = 234.6mm, 59 teeth = 238.6mm, 60 teeth = 242.7mm.

As the number of speeds on a rear cassette increases, chains to correspond with the number of speeds must become narrower in outer width to meet the packaging and chain to sprocket drive angle requirements of rear cassette equipped bikes. 12 speed chains have a maximum outer width of 5.25mm, 11 speed chains have a maximum outer width of 5.62mm, most 10 speed chains other than an obscure Italian chain from Campagnolo have a maximum outer width of 5.88mm, 9 speed chains have a maximum outer width of 6.6 to 6.8mm, 8 speed chains have a maximum outer width of 7.1mm, 7 speed chains have a maximum outer width of 7.3mm, 6 speed chains have a maximum outer width of 7.8mm.

In certain embodiments, the primary drive chain 210 has an even number of links. In certain other embodiments the primary drive chain 210 has an odd number of links. In certain other embodiments, a primary drive chain 210 has an odd number of links including a half link. In certain other embodiments, the primary drive chain 210 has an odd number of links including a half link wherein said half link uses a plate with a thickness greater than the plates on the full links.

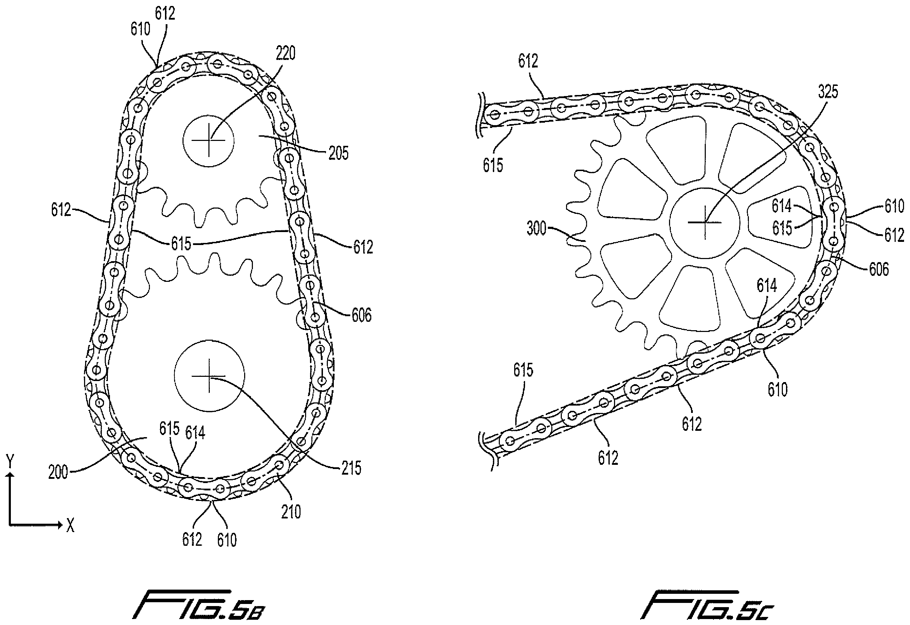

The terms chain sprocket and sprocket are used herein to differentiate between chain sprockets and belt pulleys, and the term chain sprocket can alternatively be shortened to sprocket. The terms belt pulley and pulley are used herein to differentiate between chain sprockets and belt pulleys, and the term belt pulley can alternatively be shortened to pulley. As no known term that collectively describes both belts and chains exists, for purposes of explanation in this disclosure, the term beltchain will be used to describe the family of power transmission components including belts and chains collectively. The beltchain maximum perimeter is circumscribed by a path that traces and is coincident and tangent with the outermost edges of the components of a belt or chain when viewed in a 2D side view and normal to the axes of rotation of the beltchain. For a chain with links such as a roller chain (ex. FIGS. 5B, 5C, and 13), the maximum perimeter 612 is a line that traces the outermost edges of the link plates (418, 420), and the minimum perimeter 615 is a line that traces the innermost edges of the link plates (418, 420). For sections of a chain that are engaged with a sprocket, said line is curved in shape, and for sections or chain that are not engaged with a sprocket, said line is either linear or slightly curved depending on the particularities of the design being analyzed. For example, the tension side 450 of a chain may be pulled into alignment by drive tension, whereas the slack side 452 of the chain may have a curve or curves when not tensioned. For purposes of simplification of illustration, the slack side 452 or tension side 450 of a chain can be drawn as a curve or straight line.

In some embodiments, the maximum circle diameter 602 of the primary drive sprocket 200 overlaps with the maximum circle diameter 602 of the secondary drive sprocket 300 when viewed from a side of the cycle frame and colinear with the secondary drive sprocket rotation axis 325. In other embodiments, the primary drive assembly is operably attached to the cycle frame on a first side of a tire plane of symmetry 19 and the secondary drive assembly is also operably attached to the cycle frame on the first side of the tire plane of symmetry 19 (FIG. 14B).

In some embodiments, the primary drive sprocket has a maximum circle diameter 602 and the secondary drive chain 310 maximum perimeter 612 overlaps with the maximum circle diameter 602 of the primary drive sprocket 200 when viewed from a side of the frame 25 and collinear with the secondary drive sprocket rotation axis 325, as illustrated by the shaded portion of FIG. 13.

In certain other embodiments, the primary drive chain 210 of a primary drive can overlap a bottom bracket shell in a direction axial to the rotation of the bottom bracket spindle.

In certain other embodiments, the secondary drive chain 210 of a secondary drive can overlap a bottom bracket shell in a direction axial to the rotation of the bottom bracket spindle.

In certain other embodiments, the primary drive chain 210 of a primary drive assembly can be located outboard of the outermost face of a bottom bracket shell in a direction axial to the rotation of the bottom bracket spindle, relative to a tire plane of symmetry 19.

In certain other embodiments, the secondary drive chain 310 of a secondary drive assembly can be outboard of the outmost face of a bottom bracket shell in a direction axial to the rotation of the bottom bracket spindle, relative to a tire plane of symmetry 19.

In certain other embodiments, the secondary drive chain 310 of a secondary drive assembly can be located inboard of the outmost face of a bottom bracket shell in a direction axial to the rotation of the bottom bracket spindle, relative to a tire plane of symmetry 19.

In other embodiments, the primary drive chain 210 the secondary drive chain 310 are located on the same side of the tire plane of symmetry 19.

In current direct drive cycles, structures are largely compromised and heavier than necessary to allow the packaging of components including shock absorbers, seat tubes, dropper seatposts, and mid-drives, many of which are at odds with each other competing for the same limited available space. Dropper seat posts are an important component of modern cycles, especially off-road cycles including analog and electric mountain and gravel cycles. Dropper seatposts allow for the raising and lowering of the cycle saddle 30, typically through a telescoping mechanism that is incorporated into the seatpost itself and allows for an on-the-fly change to seatpost length. Due to their telescoping nature, dropper seatposts are significantly longer than a fixed length seatpost. Since the introduction of dropper seatposts, variable seatpost length change - also known as "drop" has gone from 60mm now to a common number of 170-200mm. The increase in drop has required the total length of the dropper seatposts to increase correspondingly with the increase in drop. Fixed seatposts and short travel dropper seatposts are in the range of 300-350mm fully extended length and frames built to accommodate them typically require an 80+mm minimum insertion depth and provide a total possible insertion depth of the seatpost to a point intersecting a radius of about 300mm from the crank spindle center. Today's longer travel dropper seatposts can have fully extended lengths of 465-550mm, which require significantly more clearance than shorter posts. With the typically required 80+mm minimum insertion depth, a total possible insertion depth of the seatpost to a point intersecting a radius of about 100mm from the crank spindle center is required. In a direct drive cycle and more so a direct drive cycle using a mid-drive and rear suspension, there is little room to package components in a way to achieve proper seatpost insertion. This results in cycles being designed around and limited to shorter drop dropper seatposts, slacker seat tube 26 angles with greater seat tube offset 4 (FIG. 11), where the lower section of the seat tube 26 is more forward of the crankarm center than desired. In cycles using somewhat vertically oriented shock absorbers, this forces a corresponding more forward location of the lower shock mount. The more forward water bottle mount and water bottle location require complicated modifications to the cycle structure to fit all of the components. Hence, most modern cycles and especially off-road use cycles are forced into and feature downtubes 27 with significant bends in front of the crankarm spindle area. This bent downtube construction has almost become the norm, including on mid-drive e-bikes. In mid-drive e-bikes, motor orientation in rotation about the crankarm spindle is possible within a range typically specified by the mid-drive manufacturer. In practice, due to the packaging constraints described, the mid-drive motors are typically rotated as far clockwise as possible when viewing the cycle from the drive side while on level ground. The requirement to rotate the motor for packaging further forces the downtube to be bent and means that the motor and battery are in harm's way of oncoming obstacles while traversing rough terrain. The potential for harm to expensive and delicate motors and batteries results in many off-road cycles including externally removable armor to protect the motor and battery. This armor is both costly to manufacture and heavy, increasing the weight and cost of the cycle and decreasing its performance.

In some embodiments, the use of sequential drives allows moving the driving force line to a more steeply forward-facing inclination, which results in the rear wheel being positioned in a more rearward location than conventional direct drives at a point of full suspension compression. This arrangement results in an interlinked series of packaging improvements which lead to a series of structural improvements and therefore weight and cost improvements to the cycle frame structure. In the present invention, the more rearward end travel location of the rear wheel in turn allows the use of a steeper actual seat tube 26 angle 3 (FIG. 11). Using a steeper seat angle allows the base of the seat tube 26 to be more rearward in the frame, which can allow for a more rearward shock absorber 75 location in the frame. This more rearward seat tube 26 location can be most pronounced at the base of the seat tube 26, and in cycles using a somewhat vertically oriented shock allows for a correspondingly more rearward location of the lower shock mount. Moving the shock absorber 75 and lower shock mount more rearward allows for added water bottle mount, water bottle cage 13 and water bottle 12 clearance. This improved clearance for the seat tube 26, shock absorber 75, and water bottle 12 in turn lets the designed straighten out the downtube 27 which is a structurally superior layout to a bent downtube in any frame material. In mid-drive e-bikes, the mid-drive motor assembly can be rotated about the crank spindle axis in a counter-clockwise direction when viewing the cycle from the drive side while on level ground, therefore providing greater ground clearance for oncoming obstacles when traversing rough terrain. In turn, this added ground clearance can incentivize the deletion of protective armor, which saves cost, development time, and weight and increases performance of the cycle. The present invention's potentially steeper seat tube 26 angle combined with tactical rotational orientation of the mid-drive motor can allow for increased dropper seatpost 29 insertion on e-bikes, and therefore allow the use of longer drop seatposts to provide a wider range of rider fitment and increased performance. Therefore, the directly aforementioned improvements of the present invention achieve performance, development time, manufacturing cost benefits in additive manufacturing bonded, welded, or composite monocoque constructions.

In some embodiments, the wheel carrier 35 and the wheel carrier fixed pivot 96 comprise part of the suspension assembly. The wheel 20 is rotatably attached to the wheel carrier 35. The wheel 20 includes a rear wheel rotation axis 22, a rear tire 17, and a tire plane of symmetry 19 19 perpendicular to the rear wheel rotation axis 22. A wheel 20 in some embodiments can comprise one or more of the parts selected from a group consisting of a rim 14, tire 17, rear hub 18, spokes, tube, sealant, tape, secondary driven sprocket 305, rear freewheel 500, cassette 315, and other components. The rear wheel rotation axis 22 articulates about the wheel carrier fixed pivot 96 relative to the cycle frame 25 in an arc with a constant radius and the rear wheel rotation axis 22 moves towards the secondary drive sprocket 300 during at least some of suspension travel when the cycle 10 is viewed from the side. A driving force line 99 (FIG. 13) is defined as a line between the rear wheel rotation axis 22 and the wheel carrier fixed pivot 96. The driving force line 99 is perpendicularly offset from the secondary drive sprocket rotation axis 325 by greater than 0.5 mm. In yet other embodiments, the driving force line 99 under full suspension compression is greater than 0.5 mm and less than 30 mm perpendicular distance to the secondary drive sprocket rotation axis 325. The range of greater than 0.5mm and less than 30mm perpendicular distance is useful because based on the packaging of cycles, most desirable anti-squat responses can be achieved within this dimensional constraint, while at the same time allowing for compromise on other factors thereby achieving the best overall system performance possible.

By separating the wheel carrier fixed pivot 96 from the secondary drive sprocket rotation axis 325, the driving force line 99 is changed to a steeper forward inclination angle (e.g., the angle between the driving force line 99 and the ground A). Moving the driving force line 99 to a steeper forward inclination angle reduces needed chainstay length variation during important portions of suspension travel for optimum cornering performance. Chainstay length variation in the portion of suspension travel for better cornering performance has been compromised to some degree in known cycles with increased wheel sizes from 26"class to 29" class. An inflection point 39 between rearward and forward components of a cycle axle path 38 exists at the 80-90 mm vertical wheel displacement range in past models using 26" wheels and conventional drivetrains. Other past models using j ackshafts featured axle paths with an entirely rearward axle path and no inflection point, or inflection points beyond 90% of total vertical rear wheel displacement. For newer models using a 29" class rear wheel, the inflection point 39 and has been forced into the 35-45 mm vertical wheel displacement range with 29" wheel. By moving the driving force line to a steeper forward inclination, the inflection point 39 between rearward and forward axle path 38 can be moved back closer to the 70-120 mm range, closer to where it was for 26" wheels, even when using 29" wheels, thereby reducing chainstay length variation where the rider needs the most grip during cornering. In contrast, many of if not all of the conventional "idler type" cycles use an axle path 38 that is rearward for more than 80% of the of the rear wheel travel, so chainstay length is always varying significantly. The disclosed drive assemblies create a new class of cycle and suspension, ideally suited for modern geometry, wheels larger than 26", including ease of adaptation of e-bike mid-drives.

Anti-squat is one, if not the most, important performance parameter that must be balanced in the design of suspension cycles including e-bikes. Anti-squat is an internal chassis force that comprises driving force and chain pull force. For cycles with a direct drive, frame mounted idler drive, or frame mounted jackshaft drive, chain pull force is a parameter driven by the location of the tension side of the chain which drives the rear sprocket or cassette, and which can be shown as a line in 2D starting coincident with the chain pitch line 606 on the tension side of the chain, tangent to the rear sprocket or cassette, and projecting collinear to the chain pitch line 606 tangent to the chain pitch line 606 of the next frame mounted sprocket or chainwheel. Driving force is developed as a multiplication of chain force due to the geometry of the rear wheel and cassette mechanism and can be shown as a line in 2D starting at the rear wheel rotation axis and projecting through the kinematic chain of the suspension system. For a single pivoting rear suspension where the wheel carrier rotates around a single pivot that is connected to the cycle frame (e.g., a wheel carrier fixed pivot); and where the rear wheel axle path is semicircular in nature, the driving force line projects through the axis of the wheel carrier fixed pivot.

Previous attempts to improve suspension performance using jackshaft type suspension designs have been attempted but have not met with significant marketplace success due to poor performing anti-squat features and axle paths that were entirely rearward throughout their vertical rear wheel displacement. These previous attempts frequently employed single pivoting wheel carrier suspension, with the wheel carrier pivoting co-located to the primary driven and secondary drive sprockets and around a jackshaft. This arrangement in turn results in a constantly varying and unstable anti-squat response as the suspension compresses and extends.

It is desirable to achieve a more constant anti-squat response as the suspension cycles though its travel. The disclosed drive assemblies solve this problem by decoupling the primary driven and secondary drive sprocket axis from the wheel carrier fixed pivot. When measured with the cycle on flat level ground, in certain embodiments, a wheel carrier fixed pivot is located higher vertically than the secondary drive sprocket axis. In certain other embodiments, a wheel carrier fixed pivot is located vertically above and behind the secondary drive sprocket axis, towards the rear wheel. In certain other embodiments, a wheel carrier fixed pivot is located vertically above and forward of the secondary drive sprocket axis, towards the front wheel 15, which has a front wheel radius 11.

Due to the increased forward inclination of the driving force line 99 a greater component of driving force and a lesser component of chain force is necessary to total a given amount of anti-squat. This lessened component of chain pull force results in a useful performance benefit where there is less "pedal kickback" measurable in the present invention than direct drive type cycles. Although pedal kickback is measurable, in practice it does not manifest significantly in typical riding situations and is only perceptible at low speeds where the rear freewheel 500 is not overrunning. However, this reduction in pedal kickback can be a benefit during slow climbing situations, especially for weaker riders.

In certain embodiments, when viewed in a 2D side view with the cycle on flat level ground, the driving force line 99 can be above or below the secondary drive sprocket rotation axis 325. In certain other embodiments, the driving force line 99 can intersect the secondary drive sprocket rotation axis 325. In certain other embodiments, the driving force line 99 can start above the secondary drive sprocket rotation axis 325 at a point of zero suspension compression and move below the secondary drive sprocket rotation axis 325 as the suspension compresses towards a state of full compression. In other embodiments, the driving force line 99 can start below the secondary drive sprocket rotation axis 325 at a point of zero suspension compression and move above the secondary drive sprocket rotation axis 325 as the suspension compresses towards a state of full compression. In certain other embodiments, for example in a cycle with no suspension or fully uncompressed suspension, the driving force line 99 can lie within a perpendicular distance of the secondary drive sprocket rotation axis 325 greater than a measurement selected from the range of 0-60mm. In certain other embodiments, the driving force line 99 can lie less than 50mm, or 40mm perpendicular distance to the secondary drive sprocket rotation axis 325. In certain other embodiments, the driving force line 99 can lie less than 30 mm, or 25mm, or 20mm, or 15mm, or 10mm, or 5mm, or 0.5mm perpendicular distance to the secondary drive sprocket rotation axis 325.

Another benefit of increased forward inclination of the driving force line 99 is that an axle path tangent will be more rearward in nature for a greater portion of the wheel travel. Because cycles generally travel in a forward direction (F in the figures) with the rear wheel trailing the front wheel, obstacles in the terrain are encountered mostly with the front side of the rear wheel. Considering obstacles shaped like a box with square edges sitting flat on level ground, a larger the obstacle will contact the radius of the rear wheel at a point further from the ground than a smaller obstacle of the same shape. The apparent contact patch with the obstacle shifts further upwards as similarly shaped obstacle size increases. An impact force line can be drawn in 2D starting at the impact point between an obstacle and wheel, and projecting through the rear wheel rotation axis 22. Contact patch shift due to impacting an obstacle causes a change in direction of an impact force line from vertical when the wheel is resting on flat level ground to aligned with the impact point and rear wheel rotation axis, which in turn results in an inefficiency in force transfer through the rear wheel 20, through the rear axle, and into the suspension. For any given impact and angle of driving force line 99, the most efficient transmission of force into the suspension will occur when the impact force line is perpendicular to the driving force line 99 and parallel to the axle path tangent. With direct drive cycles using wheels larger than 26" class and rear suspension travel greater than 100mm, the driving force line 99 is always acute to the impact force line for a square edged bump of greater than 3mm, and as the suspension cycles into the travel, the angle between the driving force line 99 and impact force line becomes more acute, further reducing the efficiency of the suspension at absorbing impacts. Another way to state this scenario is that suspensions for direct drive cycles become less efficient at absorbing impacts with square edged obstacles greater than 3mm in height as the suspension cycles deeper into its travel. In the disclosed drive assemblies, by moving the chain force line to a more upward inclination, the driving force line 99 can also be moved to a more upward inclination. This upward inclination in certain embodiments can produce an impact force line being perpendicular to the driving force line 99 for a square edged obstacle of greater than 7.5mm. In certain other embodiments, an impact force line may be perpendicular to the driving force line 99 for a square edged obstacle of greater than a measurement selected from the range of 13mm to 3.2mm, and including selections from the group including 13.0mm, 12.5mm, 12.0mm, 11.5mm, 11mm, 10.5mm, 10mm, 9.5mm, 9.0mm, 8.5mm, 8.0mm, 7.5mm 7.0mm, 6.5mm, 6mm, 5.5mm, 5.0mm, 4.5mm, 4.0mm, 3.5mm, and 3.2mm.

In some embodiments. adjacent intermediate sprockets including a primary driven sprocket 205 and a secondary drive sprocket 300 may be arranged so that the two sprockets co-rotate and torque can be transmitted from one sprocket to another.

In some embodiments, the primary drive sprocket 200 may be operatively connected to a freewheel mechanism that transmits torque from the primary driven sprocket 205 to a crank spindle 542 in a first direction of rotation and allows decoupled rotation of the crank spindle 542 in a second direction of rotation, which is opposite of the first direction of rotation.

In some embodiments, the primary driven sprocket is 205 operatively connected to a freewheel mechanism that transmits torque from the primary driven sprocket 205 to the secondary drive sprocket 300 in a first direction of rotation and allows decoupled rotation of the secondary drive sprocket 300 in a second direction of rotation, which is opposite of the first direction of rotation.

In other optional forms, the secondary drive sprocket 300 is operatively connected to a freewheel mechanism that transmits torque from the secondary drive sprocket 300 to the primary driven sprocket 205 in a first direction of rotation and allows decoupled rotation of the secondary drive sprocket 300 in a second direction of rotation, which is opposite of the first direction of rotation.

In yet other optional forms, the secondary drive sprocket 300 is operatively connected to a coupling mechanism that transmits torque from the secondary drive sprocket 300 to the primary driven sprocket 205 in a first direction of rotation and allows decoupled rotation of the secondary drive sprocket 300 in a first and a second direction of rotation.

In yet other embodiments, the freewheel mechanism comprises one of a disengaging drive mechanism, a roller clutch, a planetary freecoaster, a sprag bearing, a ratchet, a one-way bearing, a one-way needle bearing, a one-way roller bearing, a one-way ball bearing, a roller ramp clutch, an electro-activated clutch, a cable actuated clutch, a hydraulic clutch, or a pneumatic clutch.

In yet other embodiments, the wheel carrier fixed pivot 96 is disposed vertically higher than the secondary drive sprocket rotation axis 325 when viewed from a side of the cycle frame and collinear with the secondary drive sprocket rotation axis 325.

In yet other embodiments, the wheel carrier fixed pivot 96 is disposed forward or aft of the secondary drive sprocket rotation axis 325 in a direction of travel.

In yet other embodiments, the sequential adjacent drive assembly includes a shock absorber 75.

In certain some embodiments, the primary drive assembly may be located inboard of the secondary drive assembly, relative to a tire plane of symmetry 19. In other embodiments, the primary drive assembly may be located inboard of the secondary drive assembly and both the primary drive assembly and the secondary drive assembly may be located more than 10 mm from the tire plane of symmetry 19. In certain other embodiments the secondary drive assembly may be located inboard of the primary drive assembly. In certain other embodiments, the primary drive assembly and the secondary drive assembly may both be outboard of a bottom bracket shell relative to the tire plane of symmetry 19.

In certain other embodiments, the primary drive assembly may both be outboard of a bottom bracket shell, and a secondary drive assembly may overlap a bottom bracket shell in a direction axial to the rotation of the bottom bracket spindle.

In yet other embodiments, the secondary drive sprocket 300 is positioned outboard of the primary drive sprocket 200 relative to the tire plane of symmetry 19 and both the secondary drive sprocket 300 and the primary drive sprocket 200 may be displaced away from the tire plane of symmetry 19 by more than 10 mm.

In yet other embodiments, the primary drive assembly may be positioned outboard of the secondary drive assembly relative to the tire plane of symmetry 19.

In yet other embodiments, the sequential adjacent drive assembly includes a disc brake disposed on a side of a tire plane of symmetry 19 than the primary drive sprocket 200 and the secondary drive sprocket 300.

In yet other embodiments, the sequential adjacent drive assembly includes a chainstay yoke 32 (FIG. 16).

In yet other embodiments, the chainstay yoke 32 is elevated above a bottom bracket when the cycle 10 is on flat ground.

In some embodiments, the chainstay 23 and/or chainstay yoke 32 are moved upwards and away from the bottom bracket and chainring or primary drive sprocket 200. In these embodiments, a much simpler and less compromised chainstay yoke 32 structure can be used than those found in conventional direct drive cycles. The elevated direct chainstay 23 layout does not compete for space between the rear wheel 20, chainring and chainstay yoke 32 structure. This allows parts to have simpler geometry and therefore cheaper manufacturing, plus achieve an optimized form for stiffness and strength, and therefore weight saving. This flexibility is further increased by replacing the typical bottom bracket co-located chainring with a smaller and variable location primary drive sprocket 200. Further packaging benefits are also realized through the sequential drive assembly because much smaller diameter sprockets can be used at the bottom bracket spindle/crank spindle location, therefore increasing clearance between the primary drive sprocket and surrounding components and/or structures.

The disclosed sequential adjacent drive assemblies may advantageously be included on electric bikes (e-bikes) that comprise an electric drive assembly including an electric drive motor 520 that is operatively connected to the primary drive sprocket 200.

In a mid-drive style electric bicycle, such as those shown in FIG. 10, and illustrated in more detail in FIGS. 8A-8H, the primary drive sprocket 200 rotates around a crank spindle axis 544 and is rotatably driven separately or collectively by the cycle crankarms 562 and the electric drive motor 520. In certain embodiments, the primary drive sprocket 200 can be connected to the crank spindle 542 using a motor freewheel 532 such that the primary drive sprocket 200 transmits torque and coupled rotation to the crankarm 562 in a first direction of rotation and allows decoupled rotation of the primary drive sprocket 200 in a second direction of rotation opposite from the first direction of rotation. In certain embodiments, the motor freewheel 532 is used to rotatably couple the primary drive sprocket 200 and crank spindle 542 such that rotation of a primary drive sprocket 200 or a crank spindle 542 transmits torque and coupled rotation to the other in a first direction of rotation and allows decoupled rotation of a primary drive sprocket 200 and a crank spindle 542 in a second direction of rotation opposite from the first direction of rotation. In certain embodiments, the motor freewheel 532 is operably connected to a cogged wheel 533 where said cogged wheel could be a gear, sprocket, or pulley that can operably transmit torque from a prime mover such as a motor or engine to the primary drive sprocket 200. In certain embodiments, the crankarm 562 is connected to the crank spindle 542 via a spline 550, with the crankarm 542 being fastened to the crank spindle 542 using a crank bolt 563, and where a primary drive sprocket 200 connects to a motor freewheel 532 which is operably connected to the spindle 542 such that rotation of the crankarm 562 can provide rotation of the primary drive sprocket 200 in one rotational direction of the primary drive sprocket 200, and an overrunning or freewheeling action in an opposite rotational direction. In certain embodiments, the primary drive sprocket 200 can be secured to the motor freewheel 532 via a lockring 554. The mid drive 520 can in certain embodiments be connected to a frame 25 and or front triangle 31 via one or more motor mounts 566. These motor mounts 566 can include any combination of and not limited to holes, slots, fasteners, bolts, pins and other means of mechanical connection. Motor mounts 566 can be located around the periphery of the mid drive 520, and in certain embodiments motor mounts 566 are located in locations including the front, top, bottom, and rear of the mid drive 520. The tire plane of symmetry 19 is located between the crankarms 562. An electric drive motor 520 can comprise one or more of the components including a mid drive 530, motor freewheel 532, bottom bracket 540, spindle 542, bottom bracket spindle axis 544, spline 550, sprocket bolt 552, lockring 554, bearing 555, crank arm 562, crank bolt 563, motor mount 566, and other components.

In certain embodiments, an intermediate sprocket may be connected to the electric motor 520 engages a belt or chain at a point between the primary drive sprocket 200 and primary driven sprocket 205.

Cycles using mid-drive motors, direct drives, and rear suspension encounter challenging packaging issues that force undesirable performance traits. Because the size of the mid-drive motor assembly is so large, in single pivoting suspensions the wheel carrier fixed pivot must be located above and further away from the crank spindle axis and tension side of the direct drive chain than desired. Additionally, the wheel carrier fixed pivot typically must be more rearward than desirable, which shortens the effective distance between the rear wheel rotation axis and the single pivoting suspension wheel carrier fixed pivot. The distance between the rear wheel rotation axis and the single pivoting suspension wheel carrier fixed pivot can be called the swingarm distance. This shorter swingarm distance results in a smaller radius of the axle path, which has the effects of forcing the axle path's inflection point from rearward to forward to a point earlier in the suspension travel, and results in a more forward location of the rear wheel at full suspension compression for the same suspension travel, fixed pivot height and using a more forward wheel carrier fixed pivot location. This elevated fixed pivot positioning results in anti-squat values that are higher than optimal, which results in a loss of performance and a narrower operational window for the sizes of riders that the suspension can properly perform for. There is benefit to using larger chainrings on prime mover assisted direct drive cycles as compared to their direct analog counterparts, as the prime mover can assist with additional torque, and at lower speeds the rider does not need as much gear reduction to provide appropriate torque at the rear wheel. This increase in sprocket size however is typically only 2 to 4 teeth and is not enough to shift the direct drive tension side radial chainline upwards enough to solve packaging issues.

In certain embodiments, such as those illustrated in FIGS. 8A-8H, the primary drive assembly and the secondary drive assembly may both be located outboard of the electric drive motor 520, relative to the tire plane of symmetry 19.

In certain other embodiments, the primary drive assembly may be both outboard of the electric drive motor 520, and the secondary drive assembly may overlap the electric drive motor 520 in a direction axial to the rotation of the crank spindle 542.

In certain other embodiments, the primary drive chain 210 may overlap the electric drive motor 520 in a direction axial to the rotation of the crank spindle 542.

In certain other embodiments, the secondary drive chain 310 may overlap the electric drive motor 520 in a direction axial to the rotation of the crank spindle 542.

In certain other embodiments, the primary drive chain 210 may be outboard of the outermost face of the electric drive motor 520 in a direction axial to the rotation of the crank spindle 542.

In certain other embodiments, the secondary drive chain 310 may be outboard of the outmost face of the electric drive motor 520 in a direction axial to the rotation of the crank spindle 542.

In certain other embodiments, the primary drive chain 210 may be inboard of the outermost face of the electric drive motor 520 in a direction axial to the rotation of the crank spindle 542.

In certain other embodiments, the secondary drive chain 310 may be inboard of the outmost face of the electric drive motor 520 in a direction axial to the rotation of the crank spindle 542.

Typical bicycles using a single front chainring and rear derailleurs and nine or more rear speeds use a front chainring size of 28-38 teeth, with larger sizes typically paired with smaller diameter rear wheels and vice versa. These chainrings are operably mounted to the bottom bracket, which is mounted on the bicycle frame at a point close to the ground. The proximity of the chainring to the ground causes the chainring to frequently come into contact with the ground or other obstacles especially on mountain bikes as they traverse rough terrain. This contact frequently causes damage to the front chainring and sprocket, in some cases requiring replacement of the components or even worse, a dangerous condition where the chainring and chain sustain so much damage that they can no longer operate properly. By using a sequentially paired primary and secondary drive system, an overdrive gear ratio can be used on the primary drive assembly, which due to the gear ratio multiplying effect of sequential sprocket pairs can allow for the use of a primary drive sprocket with fewer teeth than a typical single chainring bicycle drivetrain. The number of teeth on the primary drive sprocket in certain preferred embodiments is between 18 and 26 teeth. The fewer the teeth on a sprocket, pulley, or chainring, the smaller the diameter and radius of the sprocket or pulley or chainring. By using a sequential primary and secondary drive, a primary drive sprocket with a smaller diameter than a chainring can be used. The smaller diameter primary drive sprocket provides more ground clearance between the maximum perimeter of the sprocket or chain and the ground versus an equivalent gear ratio for a single chainring conventional bicycle drivetrain. This increased ground clearance leads to fewer impacts between the sprocket or chain and ground, therefore reducing potential damage, saving the rider maintenance, improving performance, and potentially avoiding unsafe conditions.

Within the current disclosure, the following terms can be abbreviated, and are listed in the format of "term; abbreviation". Also, terms in this list for example such as chainstay or toptube can be referred to interchangeably as chain stay or top tube or their abbreviation. Chainstay; CS, seatstay; SS, downtube; DT, toptube; TT, headtube; HT, seattube; ST, seatpost; SP, bottom bracket; BB, head tube angle; HA, seat tube angle; SA, URT; Unified Rear Triangle.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

Every document cited herein, including any cross referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern.

While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A sequential adjacent drive assembly for a rear suspension cycle, the drive assembly comprising:
a cycle frame;
a suspension assembly operably attached to the frame, the suspension assembly comprising a wheel carrier and a wheel carrier fixed pivot;
a primary drive assembly comprising a primary drive sprocket having a primary drive sprocket rotation axis; a primary driven sprocket, and a primary drive chain operably connecting the primary drive sprocket and the primary driven sprocket, the primary drive sprocket and the primary driven sprocket having a fixed drive ratio therebetween;
a secondary drive assembly operably connected to the primary drive assembly, the secondary drive assembly comprising a secondary drive sprocket having a secondary drive sprocket rotation axis, a secondary driven sprocket, and a secondary drive chain operably connecting the secondary drive sprocket and the secondary driven sprocket, the primary driven sprocket and the secondary drive sprocket having a fixed drive ratio therebetween; and
a wheel operably attached to the cycle frame, the wheel having a rotation axis and a tire plane of symmetry perpendicular to the rotation axis, and the secondary driven sprocket being operably connected to the wheel;
wherein the wheel carrier fixed pivot is located separately from the primary drive sprocket rotation axis and the secondary drive sprocket rotation axis, and
wherein the primary drive sprocket and the secondary drive sprocket are located on a first side of the tire plane of symmetry, or the primary drive assembly and the secondary drive assembly are located on the first side of the tire plane of symmetry, or the primary drive chain and the secondary drive chain are located on the first side of the tire plane of symmetry.

2. The sequential adjacent drive assembly of claim 1, wherein the primary drive sprocket is operatively connected to a coupling mechanism that transmits torque from the primary driven sprocket to a crank spindle in a first direction of rotation and allows decoupled rotation of the crank spindle in a second direction of rotation, which is opposite of the first direction of rotation.

3. The sequential adjacent drive assembly of any one of claims 1 or 2, wherein the primary driven sprocket is operatively connected to a coupling mechanism that transmits torque from the primary driven sprocket to the secondary drive sprocket in a first direction of rotation and allows decoupled rotation of the secondary drive sprocket in a second direction of rotation, which is opposite of the first direction of rotation.

4. The sequential adjacent drive assembly of any one of claims 1-3, wherein the secondary drive sprocket is operatively connected to a coupling mechanism that transmits torque from the secondary drive sprocket to the primary driven sprocket in a first direction of rotation and allows decoupled rotation of the secondary drive sprocket in a second direction of rotation, which is opposite of the first direction of rotation.

5. The sequential adjacent drive assembly of any one of claims 2-4, wherein the coupling mechanism comprises one of a freewheel, a freecoaster, or a clutch.

6. The sequential adjacent drive assembly of any one of claims 1-5, wherein the wheel carrier fixed pivot is disposed vertically higher than the secondary drive sprocket rotation axis.

7. The sequential adjacent drive assembly of any one of claims 1-6, wherein the wheel carrier fixed pivot is disposed forward or aft of the secondary drive sprocket rotation axis in a direction of travel.

8. The sequential adjacent drive assembly of any one of claims 1-7, further comprising a shock absorber.

9. The sequential adjacent drive assembly of any one of claims 1-8, further comprising a chainstay yoke that is elevated above a bottom bracket.

10. The sequential adjacent drive assembly of any one of claims 1-9, wherein a driving force line under full suspension compression is greater than 0.5 mm and less than 30 mm perpendicular distance to the secondary drive sprocket rotation axis.

11. The sequential adjacent drive assembly of any one of claims 1-10, further comprising an electric motor.

12. The sequential adjacent drive assembly of claim 11, wherein the electric motor is operably connected to an intermediate sprocket located between primary drive sprocket and secondary drive sprocket.

13. The sequential adjacent drive assembly of any one of claims 1-12, wherein the secondary drive sprocket is positioned outboard of the primary drive sprocket relative to a tire plane of symmetry.

14. The sequential adjacent drive assembly of any one of claims 1-13, wherein the primary drive assembly is positioned outboard of the secondary drive assembly relative to a tire plane of symmetry.

15. The sequential adjacent drive assembly of any one of claims 1-14, further comprising a disc brake disposed on a side of a tire plane of symmetry than the primary drive sprocket and the secondary drive sprocket.
